(19) Europäisches Patentamt
European Patent Office
Office européen des brevets

(11) **EP 3 344 455 B1**

(12) **EUROPEAN PATENT SPECIFICATION**

(45) Date of publication and mention
of the grant of the patent:
**13.11.2019 Bulletin 2019/46**

(51) Int Cl.:
***B32B 27/32*** *(2006.01)*    ***B32B 1/08*** *(2006.01)*
***C08F 6/00*** *(2006.01)*

(21) Application number: **16754599.5**

(22) Date of filing: **10.08.2016**

(86) International application number:
**PCT/US2016/046252**

(87) International publication number:
**WO 2017/039987 (09.03.2017 Gazette 2017/10)**

(54) **MULTILAYER FILMS AND METHODS THEREOF**

MEHRSCHICHTIGE FOLIEN UND VERFAHREN DAFÜR

FILMS MULTICOUCHES ET PROCÉDÉS CORRESPONDANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2015 US 201562212176 P**

(43) Date of publication of application:
**11.07.2018 Bulletin 2018/28**

(73) Proprietor: **Dow Global Technologies LLC Midland, MI 48674 (US)**

(72) Inventors:
• **LEE, Jong, Young**
  **Freeport, TX 77541 (US)**
• **KARJALA, Teresa, P.**
  **Freeport, TX 77541 (US)**
• **PATEL, Rajen, M.**
  **Freeport, TX 77541 (US)**

(74) Representative: **Boult Wade Tennant LLP 5th Floor, Salisbury Square House 8, Salisbury Square London EC4Y 8AP (GB)**

(56) References cited:
**WO-A1-99/51433**    **WO-A1-2004/031049**
**WO-A1-2012/166469**    **WO-A2-98/46672**
**US-A1- 2011 311 792**    **US-B1- 6 265 055**

Remarks:
The file contains technical information submitted after the application was filed and not included in this specification

EP 3 344 455 B1

## Description

### TECHNICAL FIELD

Embodiments of the present disclosure generally relate to multilayer films, and more particularly, to multilayer films having a high cling force and are substantially free of polyisobutylene (PIB).

### BACKGROUND

Multilayer films are often used in packaging, and may package diverse items, such as, bulk farm materials like grass and hay to small grocery store items like meats and vegetables. For all of these items it is usually desirable to have a strong, stretchy film that has a sufficient level of tack or cling such that the film can releasably adhere to itself and/or an article that is wrapped with the film.

To achieve the desired level of cling, additives, such as PIB, may be incorporated into a cling layer to improve the tack of the cling layer. However, films that include such additives can have one or more drawbacks such as 1) being excessively noisy when unwound from a film-roll when utilized on a high speed wrapping machine, 2) having to be aged for a period of time so that the additive migrates to the surface of the film (i.e., blooms) during the aging period, 3) contaminating process equipment, and 4) causing two-sided cling when one-sided cling is desired. In addition, such additives can cause undue handling issues when they are in liquid form and drip to an undue degree from process equipment.

The multilayer films may also incorporate high levels of ethylene/alpha-olefin elastomers to achieve a higher level of tack or cling; however, ethylene/alpha-olefin elastomers can make the multilayer films very expensive. In addition, the films can be difficult to process using blown film techniques when ethylene/alpha-olefin elastomers are used at high levels (e.g., greater than 90% by weight in a cling layer) because of their tackiness.

US 2011/311792 A1 and WO 2004/031049 A1 disclose multilayer films comprising cling and release layers.

Accordingly, alternative multilayer films may be desired having improved properties, such as, high cling, while also being cost-effective and/or relatively easy to fabricate using blown film techniques.

### SUMMARY

Disclosed in embodiments herein are multilayer films. The multilayer films have a cling layer and a release layer, according to present claim 1. The cling layer comprises (i) an ethylene/alpha-olefin elastomer having a density in the range of 0.855 to 0.890 grams/cm$^3$ and a melt index ($I_2$) in the range of 0.1 to 30 grams/10 minutes; and (ii) a polyethylene polymer selected from ultra-low density polyethylene, a very low density polyethylene, or combinations thereof, wherein the polyethylene polymer has a density in the range 0.885 to 0.915 grams/cm$^3$, a melt index ($I_2$) in the range of 0.1 to 30 grams/10 minutes, and a purge fraction greater than 20 percent as determined by the Crystallization Elution Fractionation (CEF) test method. The release layer comprises a polyethylene composition which comprises the reaction product of ethylene and, optionally, one or more alpha olefin comonomers, wherein the polyethylene composition is characterized by the following properties: (a) a melt index, $I_2$, of from 0.1 to 2 g/10 min, (b) a density of from 0.910 to 0.930 g/cc (g/cm$^3$), (c) a melt flow ratio, $I_{10}/I_2$, of from 6.0 to 7.5, and (d) a molecular weight distribution, (Mw/Mn) of from 2.5 to 3.9.

Also disclosed in embodiments herein are methods of making multilayer films. The methods comprise coextruding a cling layer composition with a release layer composition in an extruder to form a tube having a cling layer and a release layer, and cooling the tube to form a multilayer film. The cling layer compositions comprise (i) an ethylene/alpha-olefin elastomer having a density in the range of 0.855 to 0.890 grams/cm$^3$ and a melt index($I_2$) in the range of 0.1 to 30 grams/10 minutes; and (ii) a polyethylene polymer selected from ultra-low density polyethylene, a very low density polyethylene, or combinations thereof, wherein the polyethylene polymer has a density in the range 0.885 to 0.915 grams/cm$^3$, a melt index($I_2$) in the range of 0.1 to 30 grams/10 minutes, and a purge fraction greater than 20 percent as determined by the Crystallization Elution Fractionation (CEF) test method. The release layer composition comprises a polyethylene composition which comprises the reaction product of ethylene and, optionally, one or more alpha olefin comonomers, wherein the polyethylene composition is characterized by the following properties: (a) a melt index, $I_2$, of from 0.1 to 2 g/10 min, (b) a density of from 0.910 to 0.930 g/cc (g/cm$^3$), (c) a melt flow ratio, $I_{10}/I_2$, of from 6.0 to 7.5, and (d) a molecular weight distribution, (Mw/Mn) of from 2.5 to 3.9.

Additional features and advantages of the embodiments will be set forth in the detailed description which follows, and in part will be readily apparent to those skilled in the art from that description or recognized by practicing the embodiments described herein, including the detailed description which follows, the claims, as well as the appended drawing.

It is to be understood that both the foregoing and the following description describe various embodiments and are intended to provide an overview or framework for understanding the nature and character of the claimed subject matter. The accompanying drawing is included to provide a further understanding of the various embodiments, and is incorporated into and constitutes a part of this specification. The drawing illustrates the various embodiments described herein, and together with the description serves to explain the principles and operations of the claimed subject matter.

**BRIEF DESCRIPTION OF THE DRAWINGS**

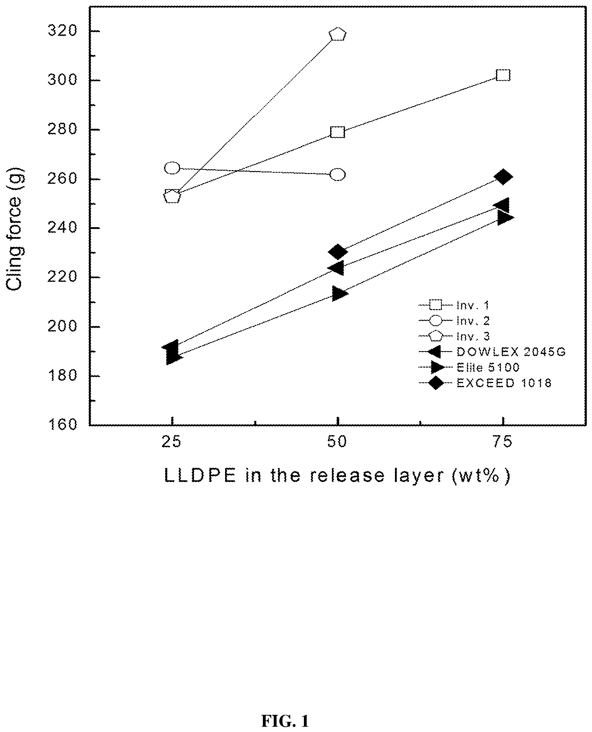

Figure 1 graphically depicts the cling force for several inventive films according to one or more embodiments described herein in comparison to several comparative films.

**DETAILED DESCRIPTION**

Reference will now be made in detail to embodiments of multilayer films and materials used to make such films. The multilayer films may be used in stretch-cling applications. It is noted, however, that this is merely an illustrative implementation of the embodiments disclosed herein. The embodiments are applicable to other technologies that are susceptible to similar problems as those discussed above. For example, the multilayer films described herein may be used as surface protection films, agricultural films, such as silage wrap, or in other flexible packaging applications, such as, shrink films, heavy duty shipping sacks, liners, sacks, stand-up pouches, detergent pouches, sachets, etc., all of which are within the purview of the present embodiments.

In embodiments described herein, the multilayer films comprise a cling layer and a release layer. Optionally, one or more core layers may be positioned between the cling layer and the release layer. The cling layer is an outer layer of the multilayer film that has a sufficient level of adhesive tack such that the cling layer of the multilayer film may form a releasable bond when brought into contact with a surface, such as, the surface of an article or the surface of the release layer. The release layer is an outer layer of the multilayer film that exhibits low adhesion to the cling layer. The release layer can allow for separation to occur between the cling layer/release layer interface on a roll such that the multilayer film may be unrolled from a spool without undue force or without the film tearing.

The thickness of the cling and release layers can vary over a wide range. In some embodiments, the cling layer may have a thickness that is from 5-50 percent of the overall thickness of the film, from 5-30 percent of the overall thickness of the film, or even from 10-30 percent of the overall thickness of the film. The release layer may have a thickness that is from 5-50 percent of the overall thickness of the film, from 5-30 percent of the overall thickness of the film, or even from 10-30 percent of the overall thickness of the film. In some embodiments, where one or more core layers are present, the one or more core layers may have a thickness that is from 0-90 percent of the overall thickness of the film, 10-90 percent of the overall thickness of the film, 20-90 percent of the overall thickness of the film, 30-90 percent of the overall thickness of the film, 40-90 percent of the overall thickness of the film, or 40-80 percent of the overall thickness of the film. The ratio of the thicknesses among a cling layer, a release layer, and any optional core layers can be any ratio that provides desirable properties such as cling, release, and the like. In some embodiments, a multilayer film can have a cling layer thickness, a core layer thickness, and a release layer thickness in a ratio in the range of 1:8:1 to 3:4:3.

Cling Layer

The cling layer comprises an ethylene/alpha-olefin elastomer and a polyethylene polymer selected from ultra-low density polyethylene, a very low density polyethylene, or combinations thereof. In some embodiments, the cling layer comprises an ethylene/alpha-olefin elastomer and an ultra-low density polyethylene. In other embodiments, the cling layer comprises an ethylene/alpha-olefin elastomer and a very low density polyethylene. In further embodiments, the cling layer comprises an ethylene/alpha-olefin elastomer, an ultra-low density polyethylene, and a very low density polyethylene.

In embodiments described herein, the ethylene/alpha-olefin elastomers may comprise greater than 50%, by weight, of the units derived from ethylene. All individual values and subranges of greater than 50%, by weight, are included and disclosed herein. For example, the ethylene/alpha-olefin elastomer may comprise at least 60%, at least 70%, at least 80%, at least 90%, at least 92%, at least 95%, at least 97%, at least 98%, at least 99%, at least 99.5%, from greater than 50% to 99%, from greater than 50% to 97%, from greater than 50% to 94%, from greater than 50% to 90%, from 70% to 99.5%, from 70% to 99%, from 70% to 97%, from 70% to 94%, from 80% to 99.5%, from 80% to 99%, from 80% to 97%, from 80% to 94%, from 80% to 90%, from 85% to 99.5%, from 85% to 99%, from 85% to 97%, from 88% to 99.9%, 88% to 99.7%, from 88% to 99.5%, from 88% to 99%, from 88% to 98%, from 88% to 97%, from 88% to 95%, from 88% to 94%, from 90% to 99.9%, from 90% to 99.5%, from 90% to 99%, from 90% to 97%, from 90% to 95%, from 93% to 99.9%, from 93% to 99.5%, from 93% to 99%, or from 93% to 97%, by weight, of the units derived from ethylene. The ethylene/alpha-olefin elastomer may comprise less than 50%, by weight, of units derived from one or more alpha-olefin comonomers. All individual values and subranges of less than 50%, by weight, are included herein and disclosed herein. For example, the ethylene/alpha-olefin elastomer may comprise less than 45%, less than 40%, less than 35%, less than 30%, less than 25%, less than 20%, less than 18%, less than 15%, less than 12%, less than 10%, less than 8%, less than 5%, less than 4%, less than 3%, from 0.2 to 15 %, 0.2 to 12%, 0.2 to 10%, 0.2 to 8%, 0.2 to 5%, 0.2 to 3%, 0.2 to 2%, 0.5 to 12%, 0.5 to 10%, 0.5 to 8%, 0.5 to 5%, 0.5 to 3%, 0.5 to 2.5%, 1 to 10%, 1 to 8%, 1 to 5%, 1 to 3%, 2 to 10%, 2 to 8%, 2 to 5%, 3.5 to 12%, 3.5 to 10%, 3.5 to 8%, 3.5% to 7%, or 4 to 12%, 4 to 10%, 4 to 8%, or 4 to 7%, by weight, of units derived from one or more alpha-olefin comonomers. The comonomer content may be measured using any suitable technique, such as techniques based on nuclear magnetic resonance ("NMR") spectroscopy, and, for example, by 13C NMR analysis as described in U.S. Patent 7,498,282.

Suitable alpha-olefin comonomers include those containing from 3 to 20 carbon atoms (C3-C20). For example, the alpha-olefin may be a C4-C20 alpha-olefin, a C4-C12 alpha-olefin, a C3-C10 alpha-olefin, a C3-C8 alpha-olefin, a C4-C8 alpha-olefin, or a C6-C8 alpha-olefin. In some embodiments, the alpha-olefin is selected from the group consisting of propylene, 1-butene, 1-pentene, 1-hexene, 4-methyl-1-pentene, 1-heptene, 1-octene, 1-nonene and 1-decene. In other embodiments, the alpha-olefin is selected from the group consisting of propylene, 1-butene, 1-hexene, and 1-octene. In further embodiments, the alpha-olefin is selected from the group consisting of 1-hexene and 1-octene.

Exemplary ethylene/alpha-olefin elastomers for use in a cling layer are commercially available under the trade names AFFINITY™ from the Dow Chemical Company, ENGAGE™ from the Dow Chemical Company, INFUSE™ from the Dow Chemical Company, EXACT from ExxonMobil Chemical, and TAFMER™ from Mitsui Chemicals, Inc. Suitable ethylene/alpha-olefin elastomers are further described in U.S. Pat. No. 5,272,236 (Lai et al.), U.S. Pat. No. 6,486,284 (Karande et al.), and U.S. Pat. No. 6,100,341 (Friedman).

Ethylene/alpha-olefin elastomers may be produced using single-site catalysts. Methods for producing olefin polymers using single site catalysts are described in U.S. Pat. No. 5,272,236 (Lai et al.) and U.S. Pat. No. 6,486,284 (Karande et al.). Single-site catalyst systems may include metallocene catalysts and post-metallocene catalysts. In exemplary embodiments, the ethylene/alpha-olefin elastomer may be produced by a metallocene catalyst or a post-metallocene catalyst.

In some embodiments, the ethylene/alpha-olefin elastomer can include one or more olefin block copolymers. Olefin block copolymers are polymers comprising two or more chemically distinct regions or segments (referred to as "blocks") that may be joined in a linear manner, that is, a polymer comprising chemically differentiated units, which are joined end-to-end with respect to polymerized ethylenic functionality, rather than in pendent or grafted fashion. The blocks may differ in the amount or type of incorporated comonomer, density, amount of crystallinity, crystallite size attributable to a polymer of such composition, type or degree of tacticity (isotactic or syndiotactic), regio-regularity or regio-irregularity, amount of branching (including long chain branching or hyper-branching), homogeneity or any other chemical or physical property. Suitable olefin block copolymers are further described in U.S. Pat. No. 7,608,668.

In embodiments described herein, the ethylene/alpha-olefin elastomers have a density in the range of 0.855 to 0.890 grams/cc (grams/cm$^3$). All individual values and subranges of from 0.855 g/cc to 0.890 g/cc are included and disclosed herein. For example, in some embodiments, the ethylene/alpha-olefin elastomers may have a density of from 0.860 g/cc to 0.890 g/cc. In other embodiments, the ethylene/alpha-olefin elastomers may have a density of from 0.865 g/cc to 0.890 g/cc. Density is measured according to ASTM D-792.

In embodiments described herein, the ethylene/alpha-olefin elastomers have a melt index ($I_2$) in the range of 0.1 to 30 grams/10 minutes. All individual values and subranges of from of 0.1 to 30 grams/10 minutes are included and disclosed herein. For example, in some embodiments, the ethylene/alpha-olefin elastomers may have a melt index ($I_2$) in the range of 0.1 to 20 grams/10 minutes. In other embodiments, the ethylene/alpha-olefin elastomers may have a melt index ($I_2$) in the range of 0.1 to 15 grams/10 minutes. In further embodiments, the ethylene/alpha-olefin elastomers may have a melt index ($I_2$) in the range of 0.1 to 10 grams/10 minutes. Melt index ($I_2$) is measured according to ASTM D-1238, Procedure B (condition 190°C/2.16 kg).

The ethylene/alpha-olefin elastomer can be incorporated into a cling layer formulation in an amount based on a variety of factors, such as, amounts of other polymers (e.g., ULDPE or ultra-low density polyethylene and VLDPE or very low density polyethylene), desired tack/cling; cost; tack stability during manufacturing, transportation, storage, and/or use conditions. In some embodiments, the ethylene/alpha-olefin elastomer is present in the cling layer in an amount in the range of 10 to 90 percent by weight of the cling layer, in the range of 15 to 90 percent by weight of the cling layer, in the range of 30 to 90 percent by weight of the cling layer, or even in the range of 40 to 85 percent by weight of the cling layer. Of course, all individual values and subranges of 10 to 90 percent by weight of the cling layer are included and disclosed herein.

The cling layer also comprises a polyethylene polymer selected from ULDPE, VLDPE, and combinations thereof. ULDPE and/or VLDPE can be incorporated into cling layer formulations in an amount based on a variety of factors, such as, the amounts of other ingredients (e.g., ethylene/alpha-olefin elastomer) present in the cling layer, desired tack/cling properties in the film; cost; tack stability during manufacturing, transportation, storage, and/or use conditions. In some embodiments, ULDPE and/or VLDPE is present in the cling layer in an amount in the range of 10 to 90 percent by weight of the cling layer, in the range of 20 to 85 percent by weight of the cling layer, in the range of 30 to 70 percent by weight of the cling layer, or even in the range of 35 to 70 percent by weight of the cling layer.

ULDPE or VLDPE comprises, in polymerized form, a majority weight percent of units derived from ethylene, based on the total weight of the ULDPE or VLDPE. The ULDPE or VLDPE may be an interpolymer of ethylene and at least one ethylenically unsaturated comonomer. In some embodiments, the comonomer is a C3-C20 alpha-olefin. In other embodiments, the comonomer is a C3-C8 alpha-olefin. In further embodiments, the C3-C8 alpha-olefin is selected from propylene, 1-butene, 1-hexene, or 1-octene. In even further embodiments, the ULDPE or VLDPE may be an ethylene/propylene copolymer, ethylene/butene copolymer, ethylene/hexene copolymer, or ethylene/octene copolymer.

ULDPE or VLDPE can be made using Ziegler-Natta catalyst techniques to provide a desired level of purge fraction. Ziegler-Natta catalysts are described in U.S. Publication Numbers 2008/0038571 (Klitzmiller et al.) and 2008/0176981 (Biscoglio et al.). In some embodiments, Ziegler-Natta catalyzed ULDPE or VLDPE includes a copolymer of ethylene and 3.5 to 10.5 mol percent of at least one comonomer selected from the group consisting of $C_3$-$C_{20}$ $\alpha$-olefins, dienes, and cycloalkenes. "ULDPE" and "VLDPE" can be used interchangeably. See, *e.g.,* U.S. Publication Number 2008/0038571(Klitzmiller et al.). In some embodiments, VLDPE refers to ULDPEs or VLDPEs that are manufactured by gas phase reaction techniques and ULDPE refers to ULDPEs or VLDPEs that are manufactured by liquid phase (solution) reaction techniques. Suitable ULDPEs include ATTANE™ 4404 available from The Dow Chemical Company. Suitable VLDPEs include DFDB-9042 NT VLDPE, available from The Dow Chemical Company.

In embodiments described herein, the polyethylene polymer has a density of 0.885 to 0.915 gr/cc (g/cm³). All individual values and subranges of from 0.885 to 0.915 g/cc are included and disclosed herein. For example, in some embodiments, the polyethylene polymer has a density of 0.885 to 0.910 g/cc. In other embodiments, the polyethylene polymer has a density of 0.890 to 0.915 g/cc. In further embodiments, the polyethylene polymer has a density of 0.890 to 0.912 g/cc. In even further embodiments, the polyethylene polymer has a density of 0.895 to 0.905 g/cc. In even further embodiments, the polyethylene polymer has a density of 0.899 to 0.905 g/cc. Density is measured according to ASTM D-792.

In embodiments described herein, the polyethylene polymer has a melt index ($I_2$) in the range of 0.1 to 30 grams/10 minutes. All individual values and subranges of from 0.1 to 30 grams/10 minutes are included and disclosed herein. For example, in some embodiments, the polyethylene polymer has a melt index ($I_2$) in the range of 0.1 to 25 g/10 minutes. In other embodiments, the polyethylene polymer has a melt index ($I_2$) in the range of 0.1 to 20 g/10 minutes. In further embodiments, the polyethylene polymer has a melt index ($I_2$) in the range of 0.1 to 15 g/10 minutes. In even further embodiments, the polyethylene polymer has a melt index ($I_2$) in the range of 0.1 to 10 g/10 minutes. In even further embodiments, the polyethylene polymer has a melt index ($I_2$) in the range of 0.5 to 10 grams/10 minutes. Melt index ($I_2$) is measured according to ASTM D-1238, Procedure B (condition 190°C/2.16 kg).

In embodiments described herein, the polyethylene polymer may have a molecular weight distribution ($M_w/M_n$) of from 3.0 to 6.0. Molecular weight distribution can be described as the ratio of weight average molecular weight ($M_w$) to number average molecular weight ($M_n$) (i.e., $M_w/M_n$), and can be measured by gel permeation chromatography techniques.

In embodiments described herein, the polyethylene polymer has a purge fraction of greater than 20 percent as determined by the Crystallization Elution Fractionation (CEF) test method. The purge fraction can qualitatively refer to branched (e.g., highly-branched) and non-crystallizable polyolefin copolymers that can be generated during a polymerization process via a Ziegler-Natta catalyst ("Z-N" catalyst), and become part of the final polyethylene product. Without being bound by theory, it is believed that a polyethylene polymer having a purge fraction of at least 20 wt.% as determined by the CEF test method can be blended with ethylene/alpha-olefin elastomer to provide a cling layer with desirable cling properties. In some embodiments, the polyethylene polymer has a purge fraction of greater than 22 percent, or greater than 25 percent. In other embodiments, the polyethylene polymer may have a purge fraction of less than 45 percent, or less than 40 percent. Of course, it should be understood that polyethylene polymers having higher purge fraction amounts may be utilized.

Without being bound by theory, it is believed that the combination of (i) an ethylene/alpha-olefin elastomer and (ii) a polyethylene polymer having a purge fraction greater than 20 percent, can provide similar or enhanced cling in the cling layer as compared to a cling layer having a higher level of PE (polyethylene) elastomer and no polyethylene polymer having a purge fraction greater than 20 percent. Specifically, it is believed that ethylene/alpha-olefin elastomers can give the cling layer a smooth surface (i.e., better surface conformability) while the polyethylene polymer having a purge fraction greater than 20 percent can enable a diffusion mechanism across the polymer interface to form entanglement within the polymer matrix. Reducing the amount of PE elastomer in a cling layer to provide desired cling properties can be advantageous as PE elastomer can be relatively expensive and/or can be difficult to process with blown film techniques when used at relatively high levels (e.g., greater than 90% by weight of a layer) because of its tackiness. Further, the cling layer can have desired cling properties without including polyisobutylene (PIB) (i.e., PIB-free). Eliminating the need for PIB additives can be advantageous as the additives are sometimes subjected to a time consuming aging period to migrate the additive to the surface of the film (i.e., bloom). In addition, the additives can be in liquid form, and therefore, drip to an undue degree from process equipment. Further, the additives may contaminate process equipment and/or cause two-sided cling where it is not desired.

The polyethylene polymer (ULDPE and/or VLDPE) may be incorporated into the cling layer at a sufficient level to permit a lower amount of ethylene/alpha-olefin elastomer present in the cling layer, while still providing desired cling properties. This can be advantageous as ethylene/alpha-olefin elastomers can be relatively more expensive than the polyethylene polymer (ULDPE and/or VLDPE). In addition, the ethylene/alpha-olefin elastomer can be difficult to process using blown film techniques, particularly, when the ethylene/alpha-olefin elastomer is present at relatively high levels (e.g., greater than 90 wt.%) in the cling layer due to its tackiness. In some embodiments, the cling layer may comprise 30 wt.% to 70 wt.% of the polyethylene polymer (ULDPE and/or VLDPE) and 70 wt.% to 30 wt.% of the ethylene/alpha-olefin elastomer.

Optionally, the cling layer can include one or more additives and/or additional polymers. For example, in some embodiments, the cling layer can optionally include low density polyethylene (LDPE) and/or linear low density polyethylene (LLDPE) as desired. Low density polyethylene can have a density in the range in the range of 0.915 to 0.935 grams/cm$^3$ and a melt index in the range of 0.1 to 30 grams/10 minutes. Linear low density polyethylene can have a density in the range of 0.912 to 0.940 grams/cm$^3$ and a melt index in the range of 0.5 to 30 grams/10 minutes. The cling layer can include LDPE in an amount from 0 to 30 percent by weight of the cling layer. The cling layer can include LLDPE in an amount from 0 to 30 percent by weight of the cling layer. In some embodiments, the cling layer can include LDPE in an amount from 0 to 30 percent by weight of the cling layer and LLDPE in an amount from 0 to 30 percent by weight of the cling layer.

The ethylene/alpha-olefin elastomer can be dry blended with the polyethylene polymer to form a cling layer blend. Methods of dry blending resins can be found in U. S. Pat. No. 3,318,538 (Needham). The ethylene/alpha-olefin elastomer can also be melt-blended with the polyethylene polymer to form a cling layer blend. Methods of melt blending resins can be found in U. S. Pat. No. 6,111,019 (Arjunan et al.).

The cling layer blend can be used in an extrusion process to form a cling layer via, for e.g., blown film techniques.

Release Layer

The release layer comprises a polyethylene composition that comprises the reaction product of ethylene and, optionally, one or more alpha olefin comonomers. The polyethylene composition comprises greater than 50 wt.% of the units derived from ethylene and less than 30 wt.% of the units derived from one or more alpha-olefin comonomers. In some embodiments, the polyethylene composition comprises (a) greater than or equal to 55%, for example, greater than or equal to 60%, greater than or equal to 65%, greater than or equal to 70%, greater than or equal to 75%, greater than or equal to 80%, greater than or equal to 85%, greater than or equal to 90%, greater than or equal to 92%, greater than or equal to 95%, greater than or equal to 97%, greater than or equal to 98%, greater than or equal to 99%, greater than or equal to 99.5%, from greater than 50% to 99%, from greater than 50% to 97%, from greater than 50% to 94%, from greater than 50% to 90%, from 70% to 99.5%, from 70% to 99%, from 70% to 97% from 70% to 94%, from 80% to 99.5%, from 80% to 99%, from 80% to 97%, from 80% to 94%, from 80% to 90%, from 85% to 99.5%, from 85% to 99%, from 85% to 97%, from 88% to 99.9%, 88% to 99.7%, from 88% to 99.5%, from 88% to 99%, from 88% to 98%, from 88% to 97%, from 88% to 95%, from 88% to 94%, from 90% to 99.9%, from 90% to 99.5% from 90% to 99%, from 90% to 97%, from 90% to 95%, from 93% to 99.9%, from 93% to 99.5% from 93% to 99%, or from 93% to 97%, by weight, of the units derived from ethylene; and (b) optionally, less than 30 percent, for example, less than 25 percent, or less than 20 percent, less than 18%, less than 15%, less than 12%, less than 10%, less than 8%, less than 5%, less than 4%, less than 3%, less than 2%, less than 1%, from 0.1 to 20 %, from 0.1 to 15 %, 0.1 to 12%, 0.1 to 10%, 0.1 to 8%, 0.1 to 5%, 0.1 to 3%, 0.1 to 2%, 0.5 to 12%, 0.5 to 10%, 0.5 to 8%, 0.5 to 5%, 0.5 to 3%, 0.5 to 2.5%, 1 to 10%, 1 to 8%, 1 to 5%, 1 to 3%, 2 to 10%, 2 to 8%, 2 to 5%, 3.5 to 12%, 3.5 to 10%, 3.5 to 8%, 3.5% to 7%, or 4 to 12%, 4 to 10%, 4 to 8%, or 4 to 7%, by weight, of units derived from one or more a-olefin comonomers. The comonomer content may be measured using any suitable technique, such as techniques based on nuclear magnetic resonance ("NMR") spectroscopy, and, for example, by 13C NMR analysis as described in U.S. Patent 7,498,282.

Suitable comonomers may include alpha-olefin comonomers, typically having no more than 20 carbon atoms. The one or more alpha-olefins may be selected from the group consisting of C3-C20 acetylenically unsaturated monomers and C4-C18 diolefins. Those skilled in the art will understand that the selected monomers are desirably those that do not destroy conventional Ziegler-Natta catalysts. For example, the alpha-olefin comonomers may have 3 to 10 carbon atoms, or 3 to 8 carbon atoms. Exemplary alpha-olefin comonomers include, but are not limited to, propylene, 1-butene, 1-pentene, 1-hexene, 1-heptene, 1-octene, 1-nonene, 1-decene, and 4-methyl-1-pentene. The one or more alpha-olefin comonomers may, for example, be selected from the group consisting of propylene, 1-butene, 1-hexene, and 1-octene; or in the alternative, from the group consisting of 1-butene, 1-hexene and 1-octene. In some embodiments, the polyethylene composition comprises greater than 0 wt.% and less than 30 wt.% of units derived from one or more of octene, hexene, or butene comonomers.

In some embodiments, the polyethylene composition of the release layer is formed in the presence of a catalyst composition comprising a multi-metallic procatalyst via solution polymerization. The multi-metallic procatalyst used in producing the reaction product is at least trimetallic, but may also include more than three transition metals, and thus may in one embodiment be defined more comprehensively as multi-metallic. These three, or more, transition metals are selected prior to production of the catalyst. In a particular embodiment, the multi-metal catalyst comprises titanium as one element.

The catalyst compositions may be prepared beginning first with preparation of a conditioned magnesium halide based support. Preparation of a conditioned magnesium halide based support begins with selecting an organomagnesium compound or a complex including an organomagnesium compound. Such compound or complex is desirably soluble in an inert hydrocarbon diluent. The concentrations of components are preferably such that when the active halide, such as a metallic or non-metallic halide, and the magnesium complex are combined, the resultant slurry is from about 0.005 to about 0.25 molar (moles/liter) with respect to magnesium. Examples of suitable inert organic diluents include liquefied ethane, propane, isobutane, n-butane, n-hexane, the various isomeric hexanes, isooctane, paraffinic mixtures of alkanes having from 5 to 10 carbon atoms, cyclohexane, methylcyclopentane, dimethylcyclohexane, dodecane, industrial solvents composed of saturated or aromatic hydrocarbons such as kerosene, naphthas, and combinations thereof, especially when freed of any olefin compounds and other impurities, and especially those having boiling points in the range from about -50 °C to about 200 °C. Also included as suitable inert diluents are ethylbenzene, cumene, decalin and combinations thereof.

Suitable organomagnesium compounds and complexes may include, for example, magnesium C2-C8 alkyls and aryls, magnesium alkoxides and aryloxides, carboxylated magnesium alkoxides, and carboxylated magnesium aryloxides. Preferred sources of magnesium moieties may include the magnesium C2-C8 alkyls and C1-C4 alkoxides. Such organomagnesium compound or complex may be reacted with a metallic or non-metallic halide source, such as a chloride, bromide, iodide, or fluoride, in order to make a magnesium halide compound under suitable conditions. Such conditions may include a temperature ranging from -25 °C to 100 °C, alternatively, 0 °C to 50 °C; a time ranging from 1 to 12 hours, alternatively, from 4 to 6 hours; or both. The result is a magnesium halide based support.

The magnesium halide support is then reacted with a selected conditioning compound containing an element selected from the group consisting of boron, aluminum, gallium, indium and tellurium, under conditions suitable to form a conditioned magnesium halide support. This compound and the magnesium halide support are then brought into contact under conditions sufficient to result in a conditioned magnesium halide support. Such conditions may include a temperature ranging from 0 °C to 50 °C, or alternatively, from 25 °C to 35 °C; a time ranging from 4 to 24 hours, or alternatively, from 6 to 12 hours; or both. The conditioning compound has a molar ratio constitution that is specific and which is believed to be an important feature in ensuring the desirable catalyst performance. Specifically, the procatalyst desirably exhibits a molar ratio of the magnesium to the conditioning compound that ranges from 3:1 to 6:1. Without wishing to be bound by any theory of mechanism, it is suggested that this aging serves to facilitate or enhance adsorption of additional metals onto the support.

Once the conditioned support is prepared and suitably aged, it is brought into contact with a titanium compound which may be added individually or as a mixture with the "second metal". In certain preferred embodiments titanium halides or alkoxides, or combinations thereof, may be selected. Conditions may include a temperature within the range from 0 °C to 50 °C, alternatively from 25 °C to 35 °C; a time from 3 hours to 24 hours, alternatively from 6 hours to 12 hours; or both. The result of this step is adsorption of at least a portion of the titanium compound onto the conditioned magnesium halide support.

Finally, one or two additional metals, referred to herein as "the second metal" and "the third metal" for convenience, will also be adsorbed onto the magnesium-based support, The "second metal" and the "third metal" are independently selected from zirconium (Zr), hafnium (Hf), vanadium (V), niobium (Nb), tantalum (Ta), chromium (Cr), molybdenum (Mo), and tungsten (W). These metals may be incorporated in any of a variety of ways known to those skilled in the art, but generally contact between the conditioned magnesium based halide support including titanium and the selected second and third metals, in, e.g., liquid phase such as an appropriate hydrocarbon solvent, will be suitable to ensure deposition of the additional metals to form what may now be referred to as the "procatalyst," which is a multi-metallic procatalyst.

The multi-metallic procatalyst has a molar ratio constitution that is specific and which is believed to be an important feature in ensuring the desirable polymer properties that may be attributed to the catalyst made from the procatalyst. Specifically, the procatalyst desirably exhibits a molar ratio of the magnesium to a combination of the titanium and the second and third metals that ranges from 30:1 to 5:1; under conditions sufficient to form a multi-metallic procatalyst. Thus, the overall molar ratio of magnesium to titanium ranges from 8:1 to 80:1.

Once the procatalyst has been formed, it may be used to form a final catalyst by combining it with a cocatalyst consisting of at least one organometallic compound such as an alkyl or haloalkyl of aluminum, an alkylaluminum halide, a Grignard reagent, an alkali metal aluminum hydride, an alkali metal borohydride, an alkali metal hydride, an alkaline earth metal hydride, or the like. The formation of the final catalyst from the reaction of the procatalyst and the organometallic cocatalyst may be carried out *in situ,* or just prior to entering the polymerization reactor. Thus, the combination of the cocatalyst and the procatalyst may occur under a wide variety of conditions. Such conditions may include, for example, contacting them under an inert atmosphere such as nitrogen, argon or other inert gas at temperatures in the range from 0 °C to 250 °C, preferably from 15 °C to 200 °C. In the preparation of the catalytic reaction product, it is not necessary to separate hydrocarbon soluble components from hydrocarbon insoluble components. Time for contact between the procatalyst and cocatalyst may desirably range, for example, from 0 to 240 seconds, preferably from 5 to 120 seconds. Various combinations of these conditions may be employed.

In embodiments described herein, the polyethylene composition may have a metal catalyst residual of greater than or equal to 1 parts by combined weight of at least three metal residues per one million parts of polyethylene polymer, wherein the at least three metal residues are selected from the group consisting of titanium, zirconium, hafnium, vanadium, niobium, tantalum, chromium, molybdenum, tungsten, and combinations thereof, and wherein each of the at least three metal residues is present at greater than or equal to 0.2 ppm, for example, in the range of from 0.2 to 5 ppm. All individual values and subranges from greater than or equal to 0.2 ppm are included herein and disclosed herein; for example, the polyethylene composition may further comprise greater than or equal to 2 parts by combined weight of at least three metal residues remaining from the multi-metallic polymerization catalyst per one million parts of the polyethylene composition.

In some embodiments, the polyethylene composition comprises at least 0.75 ppm of V (Vanadium). All individual values and subranges from at least 0.75 ppm of V are included and disclosed herein; for example the lower limit of the V in the polyethylene composition may be 0.75, 1, 1.1, 1.2, 1.3 or 1.4 ppm to an upper limit of the V in the polyethylene composition may be 5, 4, 3, 2, 1.9, 1.8, 1.7, 1.6, 1.5, or 1 ppm. The vanadium catalyst metal residual concentration for the polyethylene composition can be measured using the Neutron Activation Method for Metals described below.

In some embodiments, the polyethylene composition comprises at least 0.3 ppm of Zr (Zirconium). All individual values and subranges of at least 0.3 ppm of Zr are included and disclosed herein; for example the lower limit of the Zr in the polyethylene composition may be 0.3, 0.4, 0.5, 0.6 or 0.7 ppm. In yet another embodiment, the upper limit of the Zr in the polyethylene composition may be 5, 4, 3, 2, 1, 0.9, 0.8 or 0.7 ppm. The zirconium catalyst metal residual concentration for the polyethylene composition can be measured using the Neutron Activation Method for Metals described below.

In embodiments described herein, the polyethylene composition has a density of 0.910 g/cc to 0.930 g/cc $(g/cm^3)$. All individual values and subranges of at least 0.910 g/cc to 0.930 g/cc are included and disclosed herein. For example, in some embodiments, the polyethylene has a density of 0.910 to 0.927 g/cc, 0.910 to 0.925 g/cc, 0.915 to 0.930 g/cc, 0.915 to 0.925 g/cc, or 0.916 to 0.922 g/cc. Density is measured in accordance with ASTM D-792.

In embodiments described herein, the polyethylene composition has a melt index, $I_2$, of 0.1 g/10 min to 2.0 g/10 min. All individual values and subranges of at least 0.1 g/10 min to 2.0 g/10 min are included and disclosed herein. For example, in some embodiments, the polyethylene composition may have a melt index, $I_2$, of 0.1 g/10 min to 1.8 g/10 min, 0.1 g/10 min to 1.6 g/10 min, or 0.1 g/10 min to 1.5 g/10 min. In other embodiments, the polyethylene composition may have a melt index, $I_2$, 0.4 g/10 min to 2.0 g/10 min, 0.4 g/10 min to 1.8 g/10 min, or 0.4 g/10 min to 1.5 g/10 min. In further embodiments, the polyethylene composition may have a melt index, $I_2$, 0.5 g/10 min to 1.5 g/10 min, , 0.5 g/10 min to 1.0 g/10 min, or 0.7 g/10 min to 1.0 g/10 min. Melt index, $I_2$, is measured in accordance with ASTM D-1238, Procedure B (condition 190°C. and 2.16 kg).

In embodiments described herein, the polyethylene composition has a melt flow ratio, $I_{10}/I_2$, of from 6.0 to less than 7.6. For example, the polyethylene composition may have a melt flow ratio, $I_{10}/I_2$, of 6.0, 6.3, 6. 4 or 6.5. Melt index, $I_{10}$, is measured in accordance with ASTM D-1238, Procedure B (condition 190°C. and 10.0 kg).

In embodiments described herein, the polyethylene composition has a molecular weight distribution (Mw/Mn) of from 2.5 to 4.0. All individual values and subranges of from 2.5 to 4.0 are included and disclosed herein. For example, the polyethylene composition may have an Mw/Mn ratio from a lower limit of 2.5, 2.6, 2.7, or 2.8 to an upper limit of 4.0, 3.9, 3.8, or 3.7. In some embodiments, the polyethylene composition may have an Mw/Mn ratio of from 2.7 to 3.9, 2.8 to 3.9, or 2.8 to 3.7. In other embodiments, the polyethylene composition may have an Mw/Mn ratio of from 3.0 to 4.0, 3.1 to 3.9, 3.2 to 3.9, 3.3 to 3.8, or 3.4 to 3.7. Molecular weight distribution can be described as the ratio of weight average molecular weight ($M_w$) to number average molecular weight ($M_n$) (i.e., $M_w/M_n$), and can be measured by gel permeation chromatography techniques.

In embodiments described herein, the polyethylene composition may have a number average molecular weight, Mn (g/mol), of from 30,000 to 50,000 g/mol. All individual values and subranges of from 30,000 to 50,000 g/mol are included and disclosed herein. For example, the polyethylene composition may have a Mn from 30,000 to 45,000 g/mol, 30,000 to 40,000 g/mol, 32,000 to 38,000 g/mol, 34,000 to 37,000 g/mol, or 35,000 to 36,000 g/mol.

In embodiments described herein, the polyethylene composition may have a weight average molecular weight, Mw (g/mol), of from 110,000 to 140,000 g/mol. All individual values and subranges of from 110,000 to 140,000 g/mol are included and disclosed herein. For example, the polyethylene composition may have an Mw from 115,000 to 135,000 g/mol, 117,000 to 133,000 g/mol, or 119,000 to 131,000 g/mol.

In embodiments described herein, the polyethylene composition may have a z average molecular weight, Mz (g/mol), of from 300,000 to 425,000 g/mol. All individual values and subranges of from 300,000 to 425,000 g/mol are included and disclosed herein. For example, the polyethylene composition may have an Mz from 325,000 to 425,000 g/mol, 330,000 to 425,000 g/mol, or 360,000 to 411,000 g/mol.

In embodiments described herein, the polyethylene composition may have a melt strength of from 2 - 7 cN at 190°C. All individual values and subranges of from 2 to 7 cN are included and disclosed herein. For example, the polyethylene composition may have a melt strength from 2.5 to 6 cN, 2.75 to 5.5 cN, or 2.5 to 5.5 cN at 190°C.

In embodiments described herein, the polyethylene composition may have a wt% of Zone 1 or a purge fraction, as determined by CEF, of 3% to 6%. All individual values and subranges of from 3% to 6% are included and disclosed herein. For example, in some embodiments, the polyethylene composition may have a wt% of Zone 1 or a purge fraction, as determined by CEF, of from 3.3% to 5.5%, or 3.6% to 5.0%. Details of the CEF method are described below.

In embodiments described herein, the polyethylene composition may have a copolymer fraction, as determined by CEF, of 60% - 80%. All individual values and subranges of from 60% to 80% are included and disclosed herein. For example, the polyethylene composition may have a copolymer fraction, as determined by CEF, of from 65% to 80%, 65% to 75%, 68% to 76%, or 68% to 72%.

In embodiments described herein, the polyethylene composition may have a high density fraction, as determined by CEF, of 15% - 30%. All individual values and subranges of from 15% to 30% are included and disclosed herein. For example, the polyethylene composition may have a high density fraction, as determined by CEF, of from 17% to 29%, or 18% to 28%.

In embodiments described herein, the polyethylene composition may have a viscosity ratio (viscosity at 0.1 rad/s / viscosity at 100 rad/s, both measured at 190°C) of 3 to 6. All individual values and subranges of from 3 to 6 are included and disclosed herein. For example, the polyethylene composition may have a viscosity ratio of from 4 to 6, or 4.5 to 5.5.

In embodiments described herein, the polyethylene composition may have a tan delta at 0.1 rad/s measured at 190°C of 5 to 25. All individual values and subranges of from 5 to 25 are included and disclosed herein. For example, the polyethylene composition may have a tan delta at 0.1 rad/s measured at 190°C of from 5 to 20, 5 to 15, or 10 to 13.

In embodiments described herein, the polyethylene composition may have a comonomer distribution breadth index, CDBI, of less than 60%. All individual values and subranges of less than 60% are included and disclosed herein. For example, in some embodiments, the polyethylene composition may have a CDBI of less than 58%, 55%, 53%, 51%, 50.5%, or 50.0%. In other embodiments, the CDBI may be from 30% to 60%, 35% to 50%, or from 40% to 48%.

The CDBI may be defined as the weight percent of the polymer molecules having a comonomer content within 50 percent of the median total molar comonomer content. The CDBI of linear polyethylene, which does not contain a comonomer, is defined to be 100%. The CDBI of a copolymer is readily calculated from data obtained from crystallization elution fractionation ("CEF") as described below. Unless otherwise indicated, terms such as "comonomer content", "average comonomer content" and the like refer to the bulk comonomer content of the indicated interpolymer blend, blend component, or fraction on a molar basis.

In embodiments described herein, the polyethylene composition is characterized by one or more of the following properties: melt index ($I_2$), melt flow ratio ($I_{10}/I_2$) density, Mw/Mn, and may be further characterized by CDBI, as previously described herein.

In embodiments herein, the release layer comprises from 20 wt.% to 80 wt.% of the polyethylene composition. All individual values and subranges of from 20 wt.% to 80 wt.% are included and disclosed herein. For example, in some embodiments, the release layer comprises from 25 wt.% to 70 wt.%, 30 wt.% to 65 wt.%, or 30 wt.% to 60 wt.%, by weight of the release layer, of the polyethylene composition.

In embodiments described herein, the release layer may further comprise one or more of low density polyethylene (LDPE), linear low density polyethylene (LLDPE), polypropylene, and/or ethylene vinyl acetate (EVA). In some embodiments, the release layer may further comprise an LDPE. In other embodiments, the release layer may further comprise an LDPE present in an amount ranging from 1 wt.% to 100 wt.%, 20 wt.% to 80 wt.%, 20 wt.% to 70 wt.%, 30 wt.% to 70 wt.%, or 40 wt.% to 70 wt.%, by weight of the release layer. Also, in some embodiments, the release layer may further comprise an LLDPE. In other embodiments, the release layer may further comprise an LLDPE in an amount ranging from 1 wt.% to 100 wt.%, 1 wt.% to 50 wt.%, 1 wt.% to 25 wt.%, 5 wt.% to 25 wt.%,, or 5 wt.% to 20 wt.%, by weight of the release layer. The LDPE may have a density in the range of 0.915 to 0.935 grams/cm$^3$ and a melt index in the range of 0.1 to 30 grams/10 minutes. The LLDPE may have a density in the range in the range of 0.912 to 0.940 grams/cm$^3$ and a melt index in the range of 0.5 to 30 grams/10 minutes.

Core Layer

Optionally, a multilayer film described herein can include one or more core layers positioned between the cling layer and the release layer. In some embodiments, the multilayer film comprises a core layer positioned between the cling layer and the release layer. In other embodiments, the multilayer film comprises a single core layer positioned between and contacting at least a portion of the cling layer and the release layer.

The core layer can include one or more of LLDPE, LDPE, ethylene/alpha-olefin elastomer, polypropylene elastomer, and/or ethylene vinyl acetate (EVA). In some embodiments, the core layer comprises LLDPE in an amount from 0 to 100 percent, 25 to 100 percent, 30 to 100 percent, 40 to 100 percent, 50 to 100 percent, 60 to 100 percent, 65 to 100 percent, 70 to 100 percent, 75 to 100 percent, by weight of the core layer. In other embodiments, the core layer comprises LLDPE and one or more of ethylene/alpha-olefin elastomer, polypropylene elastomer, or ethylene vinyl acetate. The one or more of ethylene/alpha-olefin elastomer, polypropylene elastomer, or ethylene vinyl acetate may be present in amounts ranging from 1 to 30 percent, 1 to 25 percent, 1 to 20 percent, or 1 to 15 percent, by weight, of the core layer. In further embodiments, the core layer may comprise LLDPE and LDPE. The LDPE may be present in amounts ranging from 1 to 50 percent, 1 to 35 percent, 1 to 25 percent, or 1 to 20 percent, by weight, of the core layer. Exemplary LLDPE for use in the core layer of a multilayer film is commercially available under the trade names ELITE™, TUFLIN™, and DOWLEX™ from the Dow Chemical Company.

The multilayer films described herein can be made by a variety of techniques, such as, blown film techniques. Methods of making multilayer blown films are described in U.S. Patent No. 6,521,338 (Maka). For example, in some embodiments, a multilayer blown film can be made by coextruding a cling layer composition with the release layer composition (and, optionally, a core layer composition) in an extruder to form a tube having a cling layer and a release layer, and cooling the tube to form a multilayer blown stretch film.

In embodiments described herein, the multilayer films may exhibit a cling force according to the following equation:

$$\text{Cling Force (g)} = (0.97 \times \text{wt.\% of Polyethylene Composition in the Release Layer}) + 204$$

Embodiments of the multilayer films will now be further described in the following illustrative examples.

**TEST METHODS**

Density

Density is measured in accordance with ASTM D-792.

Melt Index

Melt index ($I_2$) is measured in accordance with ASTM D-1238, Procedure B (condition 190°C/2.16 kg). Melt index ($I_{10}$) is measured in accordance with ASTM D-1238, Procedure B (condition 190°C/10.0 kg).

Gel Permeation Chromatography (GPC)

The chromatographic system consisted of a PolymerChar GPC-IR (Valencia, Spain) high temperature GPC chromatograph equipped with an internal IR5 detector. The autosampler oven compartment was set at 160° Celsius and the column compartment was set at 150° Celsius. The columns used were 3 Agilent "Mixed B" 30cm 10-$\mu$m (micron) linear mixed-bed columns and a 10-um pre-column. The chromatographic solvent used was 1,2,4 trichlorobenzene and contained 200 ppm of butylated hydroxytoluene (BHT). The solvent source was nitrogen sparged. The injection volume used was 200 microliters and the flow rate was 1.0 milliliters/minute.

Calibration of the GPC column set was performed with 21 narrow molecular weight distribution polystyrene standards with molecular weights ranging from 580 to 8,400,000 and were arranged in 6 "cocktail" mixtures with at least a decade of separation between individual molecular weights. The standards were purchased from Agilent Technologies. The polystyrene standards were prepared at 0.025 grams in 50 milliliters of solvent for molecular weights equal to or greater than 1,000,000, and 0.05 grams in 50 milliliters of solvent for molecular weights less than 1,000,000. The polystyrene standards were dissolved at 80 degrees Celsius with gentle agitation for 30 minutes. The polystyrene standard peak molecular weights were converted to polyethylene molecular weights using Equation 1 (as described in Williams and Ward, J. Polym. Sci., Polym. Let., 6, 621 (1968)).:

$$M_{polyethylene} = A \times \left(M_{polystyrene}\right)^{B} \qquad \text{(EQ1)}$$

where M is the molecular weight, A has a value of 0.4315 and B is equal to 1.0.

A fifth order polynomial was used to fit the respective polyethylene-equivalent calibration points. A small adjustment to A (from approximately 0.415 to 0.44) was made to correct for column resolution and band-broadening effects such that NIST standard NBS 1475 is obtained at 52,000 Mw.

The total plate count of the GPC column set was performed with Eicosane (prepared at 0.04 g in 50 milliliters of TCB and dissolved for 20 minutes with gentle agitation.) The plate count (Equation 2) and symmetry (Equation 3) were measured on a 200 microliter injection according to the following equations:

$$Plate\ Count = 5.54 * \left( \frac{\text{RV}_{\text{Peak Max}}}{Peak\ Width\ at\ \frac{1}{2}height} \right)^2 \qquad \text{(EQ2)}$$

where RV is the retention volume in milliliters, the peak width is in milliliters, the peak max is the maximum height of the peak, and ½ height is ½ height of the peak maximum.

$$Symmetry = \frac{\left(Rear\ Peak\ RV_{one\ tenth\ height} - RV_{Peak\ max}\right)}{\left(RV_{Peak\ max} - Front\ Peak\ RV_{one\ tenth\ height}\right)} \qquad \text{(EQ3)}$$

where RV is the retention volume in milliliters and the peak width is in milliliters, Peak max is the maximum position of the peak, one tenth height is 1/10 height of the peak maximum, rear peak refers to the peak tail at later retention volumes than the peak max, and front peak refers to the peak front at earlier retention volumes than the peak max. The plate count for the chromatographic system should be greater than 24,000 and symmetry should be between 0.98 and 1.22.

Samples were prepared in a semi-automatic manner with the PolymerChar "Instrument Control" Software, wherein the samples were weight-targeted at 2 mg/ml, and the solvent (contained 200ppm BHT) was added to a pre nitrogen-sparged septa-capped vial, via the PolymerChar high temperature autosampler. The samples were dissolved for 2 hours at 160° Celsius under "low speed" shaking.

The calculations of Mn, Mw, and Mz were based on GPC results using the internal IR5 detector (measurement channel) of the PolymerChar GPC-IR chromatograph according to Equations 4-6, using PolymerChar GPCOne™ software, the baseline-subtracted IR chromatogram at each equally-spaced data collection point (i), and the polyethylene equivalent molecular weight obtained from the narrow standard calibration curve for the point (i) from Equation 1.

$$M_n = \frac{\sum^i IR_i}{\sum^i \left( IR_i \Big/ M_{polyethylene_i} \right)} \qquad \text{(EQ 4)}$$

$$M_w = \frac{\sum^i \left( IR_i * M_{polyethylene_i} \right)}{\sum^i IR_i} \qquad \text{(EQ 5)}$$

$$M_z = \frac{\sum^i \left( IR_i * M_{polyethylene_i}^{2} \right)}{\sum^i \left( IR_i * M_{polyethylene_i} \right)} \qquad \text{(EQ 6)}$$

In order to monitor the deviations over time, a flowrate marker (decane) was introduced into each sample via a micropump controlled with the PolymerChar GPC-IR system. This flowrate marker was used to linearly correct the flowrate for each sample by alignment of the respective decane peak within the sample to that of the decane peak within the narrow standards calibration. Any changes in the time of the decane marker peak are then assumed to be related to a linear shift in both flowrate and chromatographic slope. To facilitate the highest accuracy of a RV measurement of the flow marker peak, a least-squares fitting routine is used to fit the peak of the flow marker concentration chromatogram to a quadratic equation. The first derivative of the quadratic equation is then used to solve for the true peak position. After calibrating the system based on a flow marker peak, the effective flowrate (as a measurement of the calibration slope) is calculated as Equation 7. Processing of the flow marker peak was done via the PolymerChar GPCOne™ Software.

$$Flowrate_{effective} = Flowrate_{nominal} \times \frac{FlowMarker_{Calibration}}{FlowMarker_{Observed}} \quad (EQ7)$$

Neutron Activation Method for Metals

Two sets of duplicate samples were prepared by transferring approximately 3.5 grams of the pellets into pre-cleaned 2 dram polyethylene vials. Standards were prepared for each metal tested from their NIST traceable standard solutions (Certi. pure from SPEX) into 2-dram polyethylene vials. They were diluted using milli-Q pure water to 6ml and the vials were heat-sealed. The samples and standards were then analyzed for these elements, using a Mark I TRIGA nuclear reactor. The reactions and experimental conditions used for these elements are summarized in the table below. The samples were transferred to un-irradiated vials before doing the gamma-spectroscopy. The elemental concentrations were calculated using CANBERRA software and standard comparative technique. Table 1 provides measurement parameters for metals determination.

Table 1: Reactions and experimental conditions used for elements during neutron activation.

| Elements | Nuclear reaction | Isotope | Half life | Reactor Power |
|---|---|---|---|---|
| Al | $^{27}$Al(n, γ)$^{28}$Al | $^{28}$Al | 2.24 m | 250 kW |
| Cl | $^{37}$Cl(n,γ)$^{38}$Cl | $^{38}$Cl | 37.2 m | 250 kW |
| Cr | $^{50}$Cr(n,γ)$^{51}$Cr | $^{51}$Cr | 27.7 d | 250 kW |
| Hf | $^{180}$Hf(n,γ)$^{181}$Hf | $^{181}$Hf | 42.4 d | 250 kW |
| Mg | $^{26}$Mg(n,γ)$^{27}$Mg | $^{27}$Mg | 9.46 m | 250 kW |
| Mo | $^{98}$Mo(n,γ)$^{99}$Mo | $^{99}$Mo | 66.0 h | 250 kW |
| Nb | $^{93}$Nb(n,γ)$^{94m}$Nb | $^{94m}$Nb | 6.26 m | 250 kW |
| Ta | $^{181}$Ta(n,γ)$^{182}$Ta | $^{182}$Ta | 114.4 d | 250 kW |
| Ti | $^{50}$Ti(n,γ)$^{51}$Ti | $^{51}$Ti | 5.76 m | 250 kW |
| W | $^{186}$W(n,γ)$^{187}$W | $^{187}$W | 23.7 h | 250 kW |
| V | $^{51}$V(n,γ)$^{52}$V | $^{52}$V | 3.75 m | 250 kW |
| Zr | $^{96}$Zr(n,γ)$^{97}$Zr | $^{97}$Zr | 16.91 h | 250 kW |

Table 1 Continued

| Elements | Irradiation Time | Waiting Time | Counting Time | Gamma Energy, keV |
|---|---|---|---|---|
| Al | 2 m | 4 m | 4.5 min | 1778.5 |
| Cl | 2 m | 4 m | 4.5 min | 1642.5, 2166.5 |
| Cr | 90 m | 5 h | 1.6 h | 320 |
| Hf | 90 m | 5 h | 1.6 h | 133, 482 |
| Mg | 2 m | 4 m | 4.5 min | 843.8, 1014 |
| Mo | 90 m | 5 h | 1.6 h | 181, 739.7, 141 |
| Nb | 2 m | 4 m | 4.5 min | 871 |
| Ta | 90 m | 5 h | 1.6 h | 1121, 1222 |
| Ti | 2 m | 4 m | 4.5 min | 320 |
| W | 90 m | 5 h | 1.6 h | 135, 481 |
| V | 2 m | 4 m | 4.5 min | 1434 |
| Zr | 90 m | 5 h | 1.6 h | 743.4 |

Differential Scanning Calorimetry (DSC)

DSC was used to measure the melting and crystallization behavior of a polymer over a wide range of temperatures. For example, the TA Instruments Q1000 DSC, equipped with an RCS (refrigerated cooling system) and an autosampler was used to perform this analysis. During testing, a nitrogen purge gas flow of 50 ml/min was used. Each sample was melt pressed into a thin film at about 175°C; the melted sample was then air-cooled to room temperature (approx. 25°C). The film sample was formed by pressing a "0.1 to 0.2 gram" sample at 175°C at 10.3 MPa (1,500 psi), and 30 seconds, to form a 2.54 to 5.08 μm ("0.1 to 0.2 mil) thick" film. A 3-10 mg, 6 mm diameter specimen was extracted from the cooled polymer, weighed, placed in a light aluminum pan (ca 50 mg), and crimped shut. Analysis was then performed to determine its thermal properties.

The thermal behavior of the sample was determined by ramping the sample temperature up and down to create a heat flow versus temperature profile. First, the sample was rapidly heated to 180°C, and held isothermal for five minutes, in order to remove its thermal history. Next, the sample was cooled to -40°C, at a 10 °C/minute cooling rate, and held isothermal at -40°C for five minutes. The sample was then heated to 150°C (this is the "second heat" ramp) at a 10°C/minute heating rate. The cooling and second heating curves were recorded. The cool curve was analyzed by setting baseline endpoints from the beginning of crystallization to -20°C. The heat curve was analyzed by setting baseline endpoints from -20°C to the end of melt. The values determined were peak melting temperature ($T_m$), peak crystallization temperature ($T_c$), heat of fusion ($H_f$) (in Joules per gram), and the calculated % crystallinity for polyethylene samples using: % Crystallinity = $((H_f)/(292 \text{ J/g})) \times 100$. The heat of fusion ($H_f$) and the peak melting temperature were reported from the second heat curve. Peak crystallization temperature is determined from the cooling curve.

Tm1 is the highest temperature peak melting temperature, Tm2 is the second highest peak melting temperature, and Tm3 is the third highest peak melting temperature. Tc1 is the highest temperature peak crystallization temperature, Tc2 is the second highest peak crystallization temperature, and Tc3 is the third highest peak crystallization temperature.

Melt Strength

Melt strength was measured at 190°C using a Göettfert Rheotens 71.97 (Göettfert Inc.; Rock Hill, SC), melt fed with a Göettfert Rheotester 2000 capillary rheometer equipped with a flat entrance angle (180 degrees) of length of 30 mm and diameter of 2.0 mm. The pellets (20-30 gram pellets) were fed into the barrel (length = 300 mm, diameter = 12 mm), compressed and allowed to melt for 10 minutes before being extruded at a constant piston speed of 0.265 mm/s, which corresponds to a wall shear rate of 38.2 s$^{-1}$ at the given die diameter. The extrudate passed through the wheels of the Rheotens located 100 mm below the die exit and was pulled by the wheels downward at an acceleration rate of 2.4 mm/s$^2$. The force (in cN) exerted on the wheels was recorded as a function of the velocity of the wheels (in mm/s). Melt strength is reported as the plateau force (cN) before the strand broke.

Dynamic Mechanical Spectroscopy (DMS)

Resins were compression-molded into "3 mm thick x 2.54 cm (1 inch)" circular plaques at 177°C (350°F), for five minutes, under 10.3 MPa (1500 psi) pressure, in air. The sample was then taken out of the press, and placed on a counter to cool.

A constant temperature frequency sweep was performed using a TA Instruments "Advanced Rheometric Expansion System (ARES)," equipped with 25 mm (diameter) parallel plates, under a nitrogen purge. The sample was placed on the plate, and allowed to melt for five minutes at 190°C. The plates were then closed to a gap of "2 mm," the sample trimmed (extra sample that extends beyond the circumference of the "25 mm diameter" plate was removed), and then the test was started. The method had an additional five minute delay built in, to allow for temperature equilibrium. The experiments were performed at 190°C over a frequency range of 0.1 to 100 rad/s. The strain amplitude was constant at 10%. The complex viscosity $\eta^*$, tan $(\delta)$ or tan delta, viscosity at 0.1 rad/s (V0.1), the viscosity at 100 rad/s (V100), and the viscosity ratio (V0.1/V100) were calculated from these data.

Crystallization Elution Fractionation (CEF) Method

The Crystallization Elution Fractionation (CEF) technology is conducted according to Monrabal et al, Macromol. Symp. 257, 71-79 (2007). The CEF instrument is equipped with an IR-4 or IR-5 detector (such as that sold commercially from PolymerChar, Spain) and a two angle light scattering detector Model 2040 (such as those sold commercially from Precision Detectors). A 10 $\mu$m (micron) guard column of 50 mm x 4.6 mm (such as that sold commercially from PolymerLabs) is installed before the IR-4 or IR-5 detector in the detector oven. Ortho-dichlorobenzene (ODCB, 99% anhydrous grade) and 2,5-di-tert-butyl-4-methylphenol (BHT) (such as commercially available from Sigma-Aldrich) are obtained. Silica gel 40 (particle size 0.2-0.5 mm) (such as commercially available from EMD Chemicals) is also obtained. The silica gel is dried in a vacuum oven at 160°C for at least two hours before use. ODCB is sparged with dried nitrogen ($N_2$) for one hour before use. Dried nitrogen is obtained by passing nitrogen at <0.62 MPa (90 psig) over $CaCO_3$ and 0.5 nm (5Å) molecular sieves. ODCB is further dried by adding five grams of the dried silica to two liters of ODCB or by pumping through a column or columns packed with dried silica between 0.1ml/min to 1.0ml/min. Eight hundred milligrams of BHT are added to two liters of ODCB if no inert gas such as $N_2$ is used in purging the sample vial. Dried ODCB with or without BHT is hereinafter referred to as "ODCB-m." A sample solution is prepared by, using the autosampler, dissolving a polymer sample in ODCB-m at 4 mg/ml under shaking at 160°C for 2 hours. 300 $\mu$L of the sample solution is injected into the column. The temperature profile of CEF is: crystallization at 3°C/min from 110°C to 30°C, thermal equilibrium at 30°C for 5 minutes (including Soluble Fraction Elution Time being set as 2 minutes), and elution at 3°C/min from 30°C to 140°C. The flow rate during crystallization is 0.052 ml/min. The flow rate during elution is 0.50 ml/min. The IR-4 or IR-5 signal data is collected at one data point/second.

The CEF column is packed with glass beads at 125 $\mu$m $\pm$ 6% (such as those commercially available with acid wash from MO-SCI Specialty Products) with 0.318 cm (1/8 inch) stainless tubing according to U.S. 8,372,931. The internal liquid volume of the CEF column is between 2.1 ml and 2.3 ml. Temperature calibration is performed by using a mixture of NIST Standard Reference Material linear polyethylene 1475a (1.0 mg/ml) and Eicosane (2 mg/ml) in ODCB-m. The calibration consists of four steps: (1) calculating the delay volume defined as the temperature offset between the measured peak elution temperature of Eicosane minus 30.00°C; (2) subtracting the temperature offset of the elution temperature from the CEF raw temperature data. It is noted that this temperature offset is a function of experimental conditions, such as elution temperature, elution flow rate, etc.; (3) creating a linear calibration line transforming the elution temperature across a range of 30.00°C and 140.00°C such that NIST linear polyethylene 1475a has a peak temperature at 101.00°C, and Eicosane has a peak temperature of 30.00°C, (4) for the soluble fraction measured isothermally at 30°C, the elution temperature is extrapolated linearly by using the elution heating rate of 3°C/min. The reported elution peak temperatures are obtained such that the observed comonomer content calibration curve agrees with those previously reported in USP 8,372,931.

The CEF chromatogram is divided into three zones, the elution temperature range of each zone is specified in Table 8. The wt% of the lowest temperature zone is generally called the wt% of Zone 1 or the wt% of the purge fraction. The wt% of the intermediate temperature zone is generally called the wt% of Zone 2 or the wt% of the copolymer fraction. The wt% of the highest temperature zone is generally called the wt% of Zone 3 or the wt% of the high density fraction.

Comonomer Distribution Breadth Index (CDBI)

The CDBI is calculated using the methodology described in WO/93/03093 from data obtained from CEF. CDBI is defined as the weight percent of the polymer molecules having a comonomer content within 50 percent of the median total molar comonomer content. It represents a comparison of the comonomer distribution in the polymer to the comonomer distribution expected for a Bernoullian distribution.

CEF is used to measure the short chain branching distribution (SCBD) of the polyolefin. A CEF molar comonomer content calibration is performed using 24 reference materials (e.g., polyethylene octene random copolymer and ethylene butene copolymer) with a narrow SCBD having a comonomer mole fraction ranging from 0 to 0.108 and a Mw from 28,400 to 174,000 g/mole. The In (mole fraction of ethylene), which is the In (comonomer mole fraction), versus 1/T (K) is obtained, where T is the elution temperature in Kelvin of each reference material. The comonomer distribution of the reference materials is determined using 13C NMR analysis in accordance with techniques described, for example, in U.S. Patent No. 5,292,845 (Kawasaki, et al.) and by J. C. Randall in Rev. Macromol. Chem. Phys., C29, 201-317.

Cling

On-pallet stretch cling (for stretch cling performance) can be measured by Lantech SHS test equipment. The test consists of stretching the film at 200% at a constant force F2 of 3.63 kg (8 lbs). for 6 wraps with the turntable running at a rate of 10 rpm. The end of the film is then attached to a load cell which measures the amount of force, in grams, needed to pull the film off the drum.

**EXAMPLES**

Cling & Core Layers

The resins used in the cling and core layers are shown in Table 2. The resins in Table 2 are available from the Dow Chemical Company.

**Table 2: Resins used in the cling and core layers**

| Product | Density (g/cm$^3$) | Melt index (MI or I2) (g/ 10 min) | Purge fraction, as determined by CEF (wt.%) |
|---|---|---|---|
| *Resin for cling layer* | | | |
| SAMPLE 1 ULDPE | 0.900 | 5.0 | 32 |
| AFFINITY™ EG 8100G PE Elastomer | 0.870 | 1.0 | Not applicable |
| *Resin for core layer* | | | |
| DOWLEX™ 2045G LLDPE | 0.920 | 1.0 | -- |

The core layer consists of 100 wt.% of DOWLEX™ 2045G LLDPE. The cling layer consists of 65 wt.% of AFFINITY™ EG 8100G PE Elastomer and 35 wt.% of SAMPLE 1 ULDPE.

Preparation of the Ziegler-Natta (Z-N) Catalyst to make Sample 1 ULDPE

The Z-N catalyst was prepared according to the following procedure. Ethylaluminium dichloride (EADC) solution (15 wt.% EADC dissolved in Isopar E (available from ExxonMobil Chemical Co., Houston, Tex.)) was transferred into the stirred vessel containing magnesium chloride ($MgCl_2$) slurry (0.2M in Isopar E) and aged while stirring for 6 hours prior to use. Titanium tetraisopropoxide ($Ti(OiPr)_4$) was transferred to the $MgCl_2$/EADC slurry vessel, followed by at least 8 hours of aging to obtain the procatalyst. The ratio of $MgCl_2$:EADC:$Ti(OiPr)_4$ was such that the metal ratio (Mg:Al:Ti) in the procatalyst was 40:12.5:3.

Preparation of Sample 1 ULDPE

A solution polymerization reactor system was used. A hydrocarbon solvent and monomer (ethylene) were injected into the reactor as a liquid. Comonomer (1-octene) was mixed with the liquid solvent. This feed stream was cooled to less than 20° C before injection into the reactor system. The reactor system was operated at polymer concentrations in excess of 10 wt.%. The adiabatic temperature rise of the solution accounts for the heat removal from the polymerization reactions.

The solvent used in the solution polyethylene process was a high purity iso-paraffinic fraction of C6-C8 hydrocarbons. Fresh 1-octene was purified and mixed with the recycle solvent stream (contained solvent, ethylene, 1-octene, and hydrogen). After mixing with the recycle stream the combined liquid stream was further purified before using a 4.14 to 6.90 MPa (600-1000 psig) pressure feed pump to pump the contents to the reactor. Fresh ethylene was purified and compressed to 4.14 to 6.90 MPa (600-1000 psig). Hydrogen (a telogen used to reduce molecular weight) and ethylene were flow controlled into the recycle solvent stream and the total feed stream was cooled to the appropriate feed temperature, which can be <40°C. The process used the Ziegler-Natta catalyst described above to catalyze the polymerization reactions. The reactor was operated at pressures > 2.76 MPa (400 psig) and temperatures in excess of 70°C. The ethylene conversion was maintained in the reactor by controlling the catalyst injection rate. The residence time was relatively short (less than 30 minutes). The ethylene conversion per reaction pass was greater than 80 wt.% ethylene.

Upon exiting the reactor, water and antioxidant additives were injected in the polymer solution. The water hydrolyzed the catalyst, terminating the polymerization reaction. Some of the additives such as antioxidants remained with the polymer and function as stabilizers to prevent polymer degradation. The post reactor solution was superheated from reactor temperature (> 70 Deg C) to 210 - 260 Deg C in preparation for a two-stage devolatization to recover the solvent and unreacted monomers. Residual volatiles in the polymer were less than 2,000 ppm by weight. The polymer melt was pumped to a die for underwater pellet cutting.

Release Layer

The release layer consists of a blend of a low density polyethylene (LDPE) and a polyethylene composition as further outlined in Table 12 below. The low density polyethylene has a 0.922 g/cc density and a melt index, $I_2$, of 1.9 g/10 min, and is produced in a high pressure, free radical process (LDPE 501I, available from the Dow Chemical Company, Midland, MI). The comparative polyethylene compositions used in the release layer, ethylene/alpha-olefin resins and additional details are shown in Table 3 below. EXCEED™ 1018 is available from the ExxonMobil Corporation. DOWLEX™ 2045G, TUFLIN™ 7046, and ELITE™ 5100 are available from The Dow Chemical Company. The inventive resins (Inv. 1, Inv. 2, Inv. 3) and comparative resin E (comparative polyethylene) were prepared as described below. The inventive and comparative resins underwent characterization testing as shown below in Tables 5-10.

**Table 3: Comparative polyethylene compositions used in the release layer**

| Label | Product | Target Density (g/cm$^3$) | Target MI (g / 10 min) |
|---|---|---|---|
| Comp. A | DOWLEX™ 2045G | 0.920 | 1.0 |
| Comp. B | ELITE™ 5100 | 0.920 | 0.85 |
| Comp. C | EXCEED™ 1018 | 0.918 | 1.0 |
| Comp. D | TUFLIN™ 7046 | 0.919 | 1.0 |
| Comp. E | Comp. PE | 0.917 | 3.0 |

A multi-metal catalyst is prepared (Catalyst 1). Catalyst 1 is then used to prepare the inventive polyethylene compositions and comparative resin E in a solution polymerization.

### Catalyst 1 Preparation

To approximately 6,718 kg of 0.20 M $MgCl_2$ slurry was added 219 kg of EADC solution (15 wt% in heptanes), followed by agitation for 8 hours. A mixture of $TiCl_4/VOCl_3$ (239 Kg and 155 Kg, respectively) at 6% was then added, followed by 275 Kg of a 6% solution of $Zr(TMHD)_4$ in Isopar E. These two additions were performed sequentially within 3 hours of each other. The resulting catalyst premix was aged with agitation for an additional 8 hours prior to use.

Each of the catalysts prepared hereinabove is then used to prepare Polyethylene Compositions as described below.

### Production of Inventive & Comparative Polyethylene Composition Examples

The inventive resins and comparative resin E were made according to the following procedures: A heterogeneously branched ethylene/$\alpha$-olefin copolymer is prepared using a multi-constituent catalyst system, as described hereinabove, suitable for (co)polymerizing ethylene and one or more $\alpha$-olefin comonomers, e.g. 1-octene or 1-hexene, in an adiabatic continuously stirred tank reactor, CSTR, under a solution phase polymerization condition. More specifically for this example the reactor consists of two adiabatic reactors linked together in series, operating under a solution phase polymerization condition. All feed streams are introduced into the first reactor which is a mechanically agitated adiabatic CSTR.

The solvent, e.g. Petrosol D, ethylene monomer, and 1-octene or 1-hexene comonomer reactor feed streams are purified using molecular sieves prior to introduction in the reaction environment. The solvent, ethylene monomer, and 1-octene or 1-hexene comonomer are combined into a single feed stream prior to introduction into the reaction environment and are temperature controlled. The hydrogen is also added to the combined single feed stream prior to introduction into the reaction environment.

The catalyst system is fed to the reaction environment separately from the single feed stream. The catalyst-premix is combined in line to the reactor with a dilute stream of triethyl aluminum, TEA. The TEA flow is controlled to achieve a specified molar ratio of Al to Ti with the catalyst premix. The catalyst-premix is flow controlled to control the extent of reaction in the reaction environment.

The first reactor temperature and the overall ethylene conversion are controlled by adjusting the catalyst-premix flow and the total solvent flow introduced into the reaction environment. The melt index of the overall polymer is controlled by adjusting the hydrogen feed to the reaction environment. The density of the overall polymer is controlled by adjusting the comonomer feed to the reaction environment. Values for the measured parameters are contained in data Table 4.

After leaving the reaction environment, the reaction is stopped by the addition of and reaction of the active catalyst with a fluid especially designed for that purpose, typically water. The polymer is separated from the solvent and any unreacted monomer, comonomer(s), and hydrogen; the isolated polymer melt is then pelletized and packaged. The separated stream containing solvent, monomer, comonomer(s), and hydrogen is recycled after removal of a purge stream.

**Table 4: Reactor Data**

| Description | Units | Inv. 1 | Inv. 2 | Inv. 3 | Comp E |
|---|---|---|---|---|---|
| Reactor Feed (Solvent Mass Flow / Ethylene Mass Flow) | g/g | 4.79 | 4.84 | 4.90 | 4.81 |
| Reactor Feed (Comonomer Mass Flow / Ethylene Mass Flow) | g/g | 0.52 | 0.48 | 0.49 | 0.56 |
| Reactor Feed (Fresh Hydrogen Mass Flow / Ethylene Mass Flow) | g/g | 1.81E-05 | 9.76E-06 | 9.63E-06 | 7.32E-05 |
| Reactor Feed Temperature | °C | 15.5 | 14.7 | 14.5 | 14.0 |
| Reactor 1 Temperature | °C | 186.0 | 185.1 | 182.4 | 185.1 |
| Reactor 2 Temperature | °C | 212.8 | 211.4 | 209.1 | 213.0 |
| Overall Ethylene Conversion | wt% | 92.3 | 92.3 | 92.5 | 92.0 |
| Al : Ti molar ratio | mole / mole | 10.0 | 10.5 | 10.4 | 10.5 |

(continued)

| Description | Units | Inv. 1 | Inv. 2 | Inv. 3 | Comp E |
|---|---|---|---|---|---|
| Ti Catalyst Efficiency | g Poly / g Ti | 1,100,000 | 1,132,000 | 1,248,000 | 1,015,000 |
| Reactor 1 viscosity | cP | 417 | 447 | 490 | 186 |
| Comonomer | type | 1-octene | 1-hexene | 1-hexene | 1-hexene |

**Table 5: Measured Melt Index and Density Data**

| Type | $I_2$, g/10 min | $I_{10}/I_2$ | Density (g/cc) |
|---|---|---|---|
| Inv. 1 | 0.98 | 7.12 | 0.9204 |
| Inv. 2 | 0.91 | 6.52 | 0.9180 |
| Inv. 3 | 0.72 | 7.33 | 0.9170 |
| Comp. A | 1.04 | 8.13 | 0.9206 |
| Comp. B | 0.91 | 8.37 | 0.9193 |
| Comp. C | 0.98 | 5.79 | 0.9200 |
| Comp. D | 1.00 | 7.84 | 0.9188 |
| Comp. E | 2.67 | 6.86 | 0.9160 |

**Table 6: Conventional GPC Data**

| Type | Mn (g/mol) | Mw (g/mol) | Mz (g/mol) | Mw/Mn |
|---|---|---|---|---|
| Inv. 1 | 34,901 | 119,909 | 361,775 | 3.44 |
| Inv. 2 | 35,127 | 122,811 | 376,444 | 3.50 |
| Inv. 3 | 35,635 | 130,416 | 410,843 | 3.66 |
| Comp. A | 29,853 | 114,087 | 337,994 | 3.82 |
| Comp. B | 29,660 | 110,671 | 269,439 | 3.73 |
| Comp. C | 51,294 | 112,087 | 196,331 | 2.19 |
| Comp. D | 29,511 | 120,359 | 365,314 | 4.08 |
| Comp. E | 25,993 | 87,775 | 241,586 | 3.38 |

**Table 7: Melt Strength Data**

| Type | Velocity at Break (mm/s) | Melt Strength (cN) |
|---|---|---|
| Inv. 1 | 296 | 3.0 |
| Inv. 2 | 265 | 3.9 |
| Inv. 3 | 258 | 5.0 |
| Comp. A | 259 | 3.3 |
| Comp. B | 217 | 3.8 |
| Comp. C | 343 | 2.9 |
| Comp. D | Not measured | Not measured |
| Comp. E | 404 | 0.91 |

**Table 8: CEF and CDBI Data**

| Type | Peak Temp and Temperature Range (in parenthesis) of Each Zone (°C) | | | Wt% of Each zone | | | |
| | Zone 1 | Zone 2 | Zone 3 | Zone 1 | Zone 2 | Zone 3 | CDBI |
|---|---|---|---|---|---|---|---|
| Inv. 1 | 28.4 (25.04~34.45) | 86.4 (34.55~93.76) | 98.8 (93.85~119.99) | 3.8 | 70.3 | 26.0 | 40.6 |
| Inv. 2 | 28.5 (26.54~34.48) | 83.9 (34.58~92.93) | 98.1 (93.06~114.99) | 4.4 | 75.6 | 20.1 | 47.1 |
| Inv. 3 | 28.2 (25.01~34.46) | 84.6 (34.56~92.76) | 97.9 (92.84~119.97) | 4.7 | 74.8 | 20.5 | 46.9 |
| Comp. A | 28.4 (25.18~32.00) | 83.3 (32.05~92.97) | 98.9 (93.06~119.99) | 4.2 | 66.0 | 29.7 | 35.4 |
| Comp. B | 28.5 (26.34~31.97) | 68.2 (32.02~85.97) | 98.3 (86.06~119.98) | 2.4 | 56.7 | 40.8 | 28.7 |
| Comp. C | 29.4 (25.04~31.98) | 86.0 (32.03~85.97) | 87.2 (86.07~119.95) | 0.6 | 52.0 | 47.1 | 61.1 |
| Comp. D | 28.1 (26.03~31.98) | 86.2 (32.03~92.46) | 99.2 (92.52~107.97) | 15.2 | 47.5 | 37.3 | 21.5 |
| Comp. E | 28.5 (25.02~34.48) | 82.9 (34.56~92.68) | 97.9 (92.79~119.97) | 7.0 | 76.2 | 16.9 | 66.3 |

**Table 9: DMS Rheology Data (at 190°C)**

| Type | Viscosity (Pa-s at 190°C) | | | | Viscosity Ratio $\dfrac{(\text{Viscosity } 0.1\,\text{rad/s})}{(\text{Viscosity } 100\,\text{rad/s})}$ | Tan Delta 0.1 rad/s |
| | 0.1 rad/s | 1 rad/s | 10 rad/s | 100 rad/s | | |
|---|---|---|---|---|---|---|
| Inv. 1 | 7,724 | 6,531 | 4,275 | 1,824 | 4.24 | 12.77 |
| Inv. 2 | 9,214 | 7,571 | 4,758 | 1,956 | 4.71 | 10.54 |
| Inv. 3 | 10,218 | 8,310 | 5,114 | 2,047 | 4.99 | 10.08 |
| Comp. A | 8,161 | 6,563 | 3,986 | 1,603 | 5.09 | 9.82 |
| Comp. B | 10,597 | 6,882 | 3,799 | 1,510 | 7.02 | 4.24 |
| Comp. C | 6,780 | 6,314 | 4,927 | 2,358 | 2.88 | 30.64 |
| Comp. D | 8,220 | 6,594 | 3,974 | 1,588 | 5.18 | 9.51 |
| Comp. E | 2,854 | 2,633 | 2,025 | 1,070 | 2.67 | 28.61 |

**Table 10: DSC Data**

| Type | $T_{m1}$ (°C) | $T_{m2}$ (°C) | $T_{m3}$ (°C) | Heat of Fusion (J/g) | % Crystallinity | $T_{c1}$ (°C) | $T_{c2}$ (°C) | $T_{c3}$ (°C) |
|---|---|---|---|---|---|---|---|---|
| Inv. 1 | 122.7 | 120.4 | 111.2 | 138.4 | 47.4 | 107.9 | 65.4 | ND |
| Inv. 2 | 121.2 | 118.3 | 107.8 | 147.2 | 50.4 | 106.0 | 63.6 | ND |
| Inv. 3 | 121.3 | 118.2 | 107.6 | 150.2 | 51.4 | 106.1 | 63.6 | ND |
| Comp. A | 123.7 | 120.9 | ND | 148.5 | 50.9 | 106.8 | 64.3 | ND |
| Comp. B | 123.9 | 121.0 | ND | 141.5 | 48.5 | 107.2 | 88.7 | 62.3 |
| Comp. C | 117.8 | 109.6 | ND | 143.9 | 49.3 | 106.1 | 68.1 | ND |
| Comp. D | 123.9 | ND | ND | 138.5 | 47.4 | 111.2 | ND | ND |
| Comp. E | 122.0 | 117.4 | 106.0 | 137.0 | 46.9 | 104.8 | 61.4 | ND |
| ND refers to not detectable. | | | | | | | | |

**Table 11: Neutron Activation Data***

| Type | Al, ppm | Mg, ppm | Ti, ppm | V, ppm | Hf, ppb | Zr, ppm | Cl, ppm |
|---|---|---|---|---|---|---|---|
| Inv. 1 | 9.2 ± 0.4 | 16 ± 2 | 0.67 ± 0.03 | 1.6 ± 0.1 | 0.26 ± 0.03 | 0.88 ± 0.08 | 58 ± 2 |
| Inv. 2 | 9.9 ± 0.4 | 18 ± 2 | 1.02 ± 0.06 | 1.7 ± 0.1 | 0.23 ± 0.03 | 0.96 ± 0.09 | 61 ± 2 |
| Inv. 3 | 9.0 ± 0.4 | 15 ± 2 | 0.77 ± 0.03 | 1.5 ± 0.1 | 0.26 ± 0.03 | 0.83 ± 0.09 | 55 ± 2 |
| * Niobium (Nb) (5 ppm), tantalum (Ta) (50 ppb), chromium (Cr) (0.5 ppm), molybdenum (Mo) (50 ppb), and tungsten (W) (5ppm) were not detected in any of the examples at their respective detection limits, as indicated in the parentheses following each element. | | | | | | | |

Films

Three layer blown films were made using a Hosokawa Alpine 7-layer blown film line. The cling layer (outside of the bubble) with layer ratio of 15% is produced from extruder 1. The core layer with layer ratio of 70% is produced from extruder 2, 3, 4, 5 and 6. The release layer (inside of the bubble) with layer ratio of 15% is produced from extruder 7. All extruders are groove-feed and L/D ratio is 30 with diameter of 50 mm. Melt temperature of extrusion for all extruders is ranged from 232 to 249°C (450 to 480°F) and die temperature is 232°C (450°F). Die gap is 1999 $\mu$m (78.7 mil). Blow up ratio is 2.5 and film gauge is 25.4 $\mu$m (1 mil). Output rate is 136 kg/hr (300 lbs/hr). The film structures are further outlined in Table 12 below.

**Table 12: Blown Film Structures**

| | Cling Layer (15% of Overall Film) | Core Layer (70% of Overall Film) | Release Layer (15% of Overall Film) |
|---|---|---|---|
| Inv. Film 1 | 65 wt.% AFFINITY™ 8100G 35 wt.% Sample 1 ULDPE | 100 wt.% DOWLEX™ 2045G | 25 wt.% Inv.1 75 wt.% LDPE 501I |
| Inv. Film 2 | 65 wt.% AFFINITY™ 8100G 35 wt.% Sample 1 ULDPE | 100 wt.% DOWLEX™ 2045G | 50 wt.% Inv. 1 50 wt.% LDPE 501I |
| Inv. Film 3 | 65 wt.% AFFINITY™ 8100G 35 wt.% Sample 1 ULDPE | 100 wt.% DOWLEX™ 2045G | 75 wt.% Inv. 1 25 wt.% LDPE 501I |
| Inv. Film 4 | 65 wt.% AFFINITY™ 8100G 35 wt. % Sample 1 ULDPE | 100 wt. % DOWLEX™ 2045G | 25 wt.% Inv.2 75 wt.% LDPE 501I |
| Inv. Film 5 | 65 wt.% AFFINITY™ 8100G 35 wt. % Sample 1 ULDPE | 100 wt.% DOWLEX™ 2045G | 50 wt.% Inv. 2 50 wt.% LDPE 501I |
| Inv. Film 6 | 65 wt.% AFFINITY™ 8100G 35 wt. % Sample 1 ULDPE | 100 wt.% DOWLEX™ 2045G | 25 wt.% Inv.3 75 wt.% LDPE 501I |
| Inv. Film 7 | 65 wt.% AFFINITY™ 8100G 35 wt. % Sample 1 ULDPE | 100 wt.% DOWLEX™ 2045G | 50 wt.% Inv. 3 50 wt.% LDPE 501I |

(continued)

| | Cling Layer (15% of Overall Film) | Core Layer (70% of Overall Film) | Release Layer (15% of Overall Film) |
|---|---|---|---|
| Comp. Film 1 | 65 wt.%<br><br>AFFINITY™ 8100G<br>35 wt. %<br>Sample 1 ULDPE | 100 wt.%<br><br>DOWLEX™ 2045G | 25 wt.% Comp. A<br><br>75 wt.% LDPE 501I |
| Comp. Film 2 | 65 wt.%<br><br>AFFINITY™ 8100G<br>35 wt. %<br>Sample 1 ULDPE | 100 wt.%<br><br>DOWLEX™ 2045G | 50 wt.% Comp. A<br><br>50 wt.% LDPE 501I |
| Comp. Film 3 | 65 wt.%<br><br>AFFINITY™ 8100G<br>35 wt. %<br>Sample 1 ULDPE | 100 wt.%<br><br>DOWLEX™ 2045G | 75 wt.% Comp. A<br><br>25 wt.% LDPE 501I |
| Comp. Film 4 | 65 wt.%<br><br>AFFINITY™ 8100G<br>35 wt. %<br>Sample 1 ULDPE | 100 wt.%<br><br>DOWLEX™ 2045G | 25 wt.% Comp. B<br><br>75 wt.% LDPE 501I |
| Comp. Film 5 | 65 wt.%<br><br>AFFINITY™ 8100G<br>35 wt. %<br>Sample 1 ULDPE | 100 wt.%<br><br>DOWLEX™ 2045G | 50 wt.% Comp. B<br><br>50 wt.% LDPE 501I |
| Comp. Film 6 | 65 wt.%<br><br>AFFINITY™ 8100G<br>35 wt. %<br>Sample 1 ULDPE | 100 wt.%<br><br>DOWLEX™ 2045G | 75 wt.% Comp. B<br><br>25 wt.% LDPE 501I |
| Comp. Film 7 | 65 wt.%<br><br>AFFINITY™ 8100G<br>35 wt. %<br>Sample 1 ULDPE | 100 wt.%<br><br>DOWLEX™ 2045G | 50 wt.% Comp. C<br><br>50 wt.% LDPE 501I |
| Comp. Film 8 | 65 wt.%<br><br>AFFINITY™ 8100G<br>35 wt. %<br>Sample 1 ULDPE | 100 wt.%<br><br>DOWLEX™ 2045G | 75 wt.% Comp. C<br><br>25 wt.% LDPE 501I |
| Comp. Film 9 | 65 wt.%<br><br>AFFINITY™ 8100G<br>35 wt. %<br>Sample 1 ULDPE | 100 wt.%<br><br>DOWLEX™ 2045G | 25 wt.% Comp. D<br><br>75 wt.% LDPE 501I |

(continued)

| | Cling Layer (15% of Overall Film) | Core Layer (70% of Overall Film) | Release Layer (15% of Overall Film) |
|---|---|---|---|
| Comp. Film 10 | 65 wt.%<br><br>AFFINITY™ 8100G<br>35 wt. %<br>Sample 1 ULDPE | 100 wt.%<br><br>DOWLEX™ 2045G | 50 wt.% Comp. D<br><br>50 wt.% LDPE 501I |
| Comp. Film 11 | 65 wt.%<br><br>AFFINITY™ 8100G<br>35 wt. %<br>Sample 1 ULDPE | 100 wt.%<br><br>DOWLEX™ 2045G | 75 wt.% Comp. D<br><br>25 wt.% LDPE 501I |
| Comp. Film 12 | 65 wt.%<br><br>AFFINITY™ 8100G<br>35 wt. %<br>Sample 1 ULDPE | 100 wt.%<br><br>DOWLEX™ 2045G | 25 wt.% Comp. E<br><br>75 wt.% LDPE 501I |
| Comp. Film 13 | 65 wt.%<br><br>AFFINITY™ 8100G<br>35 wt. %<br>Sample 1 ULDPE | 100 wt.%<br><br>DOWLEX™ 2045G | 50 wt.% Comp. E<br><br>50 wt.% LDPE 501I |
| Comp. Film 14 | 65 wt.%<br><br>AFFINITY™ 8100G<br>35 wt. %<br>Sample 1 ULDPE | 100 wt.%<br><br>DOWLEX™ 2045G | 75 wt.% Comp. E<br><br>25 wt.% LDPE 501I |

TABLE 13 - The Effect of Release Layer Formulation on Stretch Cling Performance

| Film # | Cling Force (g) per 50.8 cm (20 inch) film width |
|---|---|
| Inv. Film 1 | 253 |
| Inv. Film 2 | 278 |
| Inv. Film 3 | 302 |
| Inv. Film 4 | 264 |
| Inv. Film 5 | 261 |
| Inv. Film 6 | 252 |
| Inv. Film 7 | 318 |
| Comp. Film 1 | 191 |
| Comp. Film 2 | 223 |
| Comp. Film 3 | 249 |
| Comp. Film 4 | 187 |
| Comp. Film 5 | 213 |
| Comp. Film 6 | 244 |
| Comp. Film 7 | 230 |

(continued)

| Film # | Cling Force (g) per 50.8 cm (20 inch) film width |
|---|---|
| Comp. Film 8 | 261 |
| Comp. Film 9 | Unmeasurable - Too difficult to unwind the film (i.e., the film blocked) |
| Comp. Film 10 | Unmeasurable - Too difficult to unwind the film (i.e., the film blocked) |
| Comp. Film 11 | Unmeasurable - Too difficult to unwind the film (i.e., the film blocked) |
| Comp. Film 12 | Unmeasurable - Too difficult to unwind the film (i.e., the film blocked) |
| Comp. Film 13 | Unmeasurable - Too difficult to unwind the film (i.e., the film blocked) |
| Comp. Film 14 | Unmeasurable - Too difficult to unwind the film (i.e., the film blocked) |

Further shown in FIG. 1 is a graph of cling force performance as the amount of polyethylene composition in the release layer increases. As depicted, the inventive films have significantly higher cling force.

The dimensions and values disclosed herein are not to be understood as being strictly limited to the exact numerical values recited. Instead, unless otherwise specified, each such dimension is intended to mean both the recited value and a functionally equivalent range surrounding that value.

**Claims**

1. A multilayer film comprising a cling layer and a release layer, wherein:

   the cling layer comprises:

   (i) an ethylene/alpha-olefin elastomer having a density in the range of 0.855 to 0.890 grams/cm$^3$, as measured in accordance with ASTM D-792, and a melt index, $I_2$, as measured in accordance with ASTM D-1238, Procedure B (condition 190°C/2.16 kg), in the range of 0.1 to 30 grams/10 minutes; and
   (ii) a polyethylene polymer selected from ultra-low density polyethylene, a very low density polyethylene, or combinations thereof, wherein the polyethylene polymer has a density in the range 0.885 to 0.915 grams/cm$^3$, as measured in accordance with ASTM D-792, a melt index, $I_2$, in the range of 0.1 to 30 grams/10 minutes, as measured in accordance with ASTM D-1238, Procedure B (condition 190°C/2.16 kg), and a purge fraction greater than 20 percent as determined by the Crystallization Elution Fractionation (CEF) test method described in the description; and

   the release layer comprises a polyethylene composition which comprises the reaction product of ethylene and, optionally, one or more alpha olefin comonomers, wherein the polyethylene composition is **characterized by** the following properties:

   (a) a melt index, $I_2$, of from 0.1 to 2.0 g/10 min; as measured in accordance with ASTM D-1238, Procedure B (condition 190°C/2.16 kg),
   (b) a density of from 0.910 to 0.930 g/cc, as measured in accordance with ASTM D-792,
   (c) a melt flow ratio, $I_{10}/I_2$, of from 6.0 to 7.6, wherein $I_{10}$ is measured in accordance with ASTM D-1238, Procedure B (condition 190°C/10.0 kg) and $I_2$ is measured in accordance with ASTM D-1238, Procedure B (condition 190°C/2.16 kg), and
   (d) a molecular weight distribution, (Mw/Mn) of from 2.5 to 4.0.

2. The film of claim 1, wherein the polyethylene composition of the release layer is formed in the presence of a catalyst composition comprising a multi-metallic procatalyst via solution polymerization.

3. The film of claim 1, wherein the release layer comprises from 20 wt.% to 80 wt.% of the polyethylene composition.

4. The film of claim 1, wherein the release layer further comprises a low density polyethylene.

5. The film of claim 1, wherein the polyethylene comonomer of the release layer is **characterized by** a comonomer distribution breadth index, CDBI, of less than 60%, as determined according to the method described in the description.

6.   The film of claim 1, wherein the polyethylene composition of the release layer is **characterized by** a melt flow ratio, $I_{10}/I_2$, from 6.5 to 7.6, wherein $I_{10}$ is measured in accordance with ASTM D-1238, Procedure B (condition 190°C/10.0 kg) and $I_2$ is measured in accordance with ASTM D-1238, Procedure B (condition 190°C/2.16 kg).

7.   The film of claim 1, wherein the cling layer comprises from 10 wt.% to 90 wt.% of the ethylene/alpha-olefin elastomer.

8.   The film of claim 1, wherein the film further comprises a core layer positioned between the cling layer and the release layer.

9.   The film of claim 1, wherein the cling layer has a thickness that is from 5-30 percent of the overall thickness of the film.

10.  The film of claim 1, wherein the release layer has a thickness that is from 5-30 percent of the overall thickness of the film.

11.  The film of claim 1, wherein the film exhibits a cling force according to the following equation:

$$\text{Cling Force (g)} = (0.97 \times \text{wt.\% of Polyethylene Composition in the Release Layer}) + 204$$

12.  The film of claim 1, wherein the polyethylene composition has a metal catalyst residual of greater than or equal to 1 parts by combined weight of at least three metal residues per one million parts of polyethylene polymer, wherein the at least three metal residues are selected from the group consisting of titanium, zirconium, hafnium, vanadium, niobium, tantalum, chromium, molybdenum, tungsten, and combinations thereof, and wherein each of the at least three metal residues is present at greater than or equal to 0.2 ppm.

13.  The film of claim 1, wherein the polyethylene composition has at least 0.75 ppm of Vanadium.

14.  The film of claim 1, wherein the polyethylene comprises at least 0.3 ppm Zirconium.

15.  A method of making the multilayer film according to any one of the previous claims, wherein the method comprises:

coextruding the cling layer composition with the release layer composition in an extruder to form a tube having a cling layer and a release layer; and
cooling the tube to form a multilayer blown stretch film.

**Patentansprüche**

1.   Eine mehrschichtige Folie, beinhaltend eine Haftschicht und eine Trennschicht, wobei:

die Haftschicht Folgendes beinhaltet:

(i) ein Ethylen-Alphaolefin-Elastomer mit einer Dichte im Bereich von 0,855 bis 0,890 Gramm/cm$^3$, wie in Übereinstimmung mit ASTM D-792 gemessen, und einem Schmelzindex, $I_2$, wie in Übereinstimmung mit ASTM D-1238, Prozedur B (Bedingung 190 °C/2,16 kg) gemessen, im Bereich von 0,1 bis 30 Gramm/10 Minuten; und
(ii) ein Polyethylenpolymer, ausgewählt aus Polyethylen ultraniedriger Dichte, einem Polyethylen sehr niedriger Dichte oder Kombinationen davon, wobei das Polyethylenpolymer eine Dichte im Bereich von 0,885 bis 0,915 Gramm/cm$^3$, wie in Übereinstimmung mit ASTM D-792 gemessen, einen Schmelzindex, $I_2$, im Bereich von 0,1 bis 30 Gramm/10 Minuten, wie in Übereinstimmung mit ASTM D-1238, Prozedur B (Bedingung 190 °C/2,16 kg) gemessen, und eine Spülfraktion größer als 20 Prozent, wie durch das in der Beschreibung beschriebene Kristallisations-Elutions-Fraktionierungs(Crystallization Elution Fractionation (CEF))-Prüfverfahren bestimmt, aufweist;

und

die Trennschicht eine Polyethylenzusammensetzung beinhaltet, die das Reaktionsprodukt von Ethylen und wahlweise einem oder mehreren Alphaolefincomonomeren beinhaltet, wobei die Polyethylenzusammensetzung durch die folgenden Eigenschaften gekennzeichnet ist:

(a) einen Schmelzindex, $I_2$, von 0,1 bis 2,0 g/10 min; wie in Übereinstimmung mit ASTM D-1238, Prozedur B (Bedingung 190 °C/2,16 kg) gemessen,

(b) eine Dichte von 0,910 bis 0,930 g/cm$^3$, wie in Übereinstimmung mit ASTM D-792 gemessen,

(c) ein Schmelzflussverhältnis, $I_{10}/I_2$, von 6,0 bis 7,6, wobei $I_{10}$ in Übereinstimmung mit ASTM D-1238, Prozedur B (Bedingung 190 °C/10,0 kg) gemessen wird und $I_2$ in Übereinstimmung mit ASTM D-1238, Prozedur B (Bedingung 190 °C/2,16 kg) gemessen wird, und

(d) eine Molekulargewichtsverteilung (Mw/Mn) von 2,5 bis 4,0.

2. Folie gemäß Anspruch 1, wobei die Polyethylenzusammensetzung der Trennschicht in Gegenwart einer Katalysatorzusammensetzung, die einen Multimetall-Prokatalysator beinhaltet, mittels Lösungspolymerisation gebildet wird.

3. Folie gemäß Anspruch 1, wobei die Trennschicht zu 20 Gew.-% bis 80 Gew.-% die Polyethylenzusammensetzung beinhaltet.

4. Folie gemäß Anspruch 1, wobei die Trennschicht ferner ein Polyethylen niedriger Dichte beinhaltet.

5. Folie gemäß Anspruch 1, wobei das Polyethylencomonomer der Trennschicht **gekennzeichnet ist durch** einen Comonomer-Verteilungsbreitenindex (comonomer distribution breadth index, CDBI) von weniger als 60 %, wie gemäß dem in der Beschreibung beschriebenen Verfahren bestimmt.

6. Folie gemäß Anspruch 1, wobei die Polyethylenzusammensetzung der Trennschicht **gekennzeichnet ist durch** ein Schmelzflussverhältnis, $I_{10}/I_2$, von 6,5 bis 7,6, wobei $I_{10}$ in Übereinstimmung mit ASTM D-1238, Prozedur B (Bedingung 190 °C/10,0 kg) gemessen wird und $I_2$ in Übereinstimmung mit ASTM D-1238, Prozedur B (Bedingung 190 °C/2,16 kg) gemessen wird.

7. Folie gemäß Anspruch 1, wobei die Haftschicht zu 10 Gew.-% bis 90 Gew.-% das Ethylen-Alphaolefin-Elastomer beinhaltet.

8. Folie gemäß Anspruch 1, wobei die Folie ferner eine zwischen der Haftschicht und der Trennschicht positionierte Kernschicht beinhaltet.

9. Folie gemäß Anspruch 1, wobei die Haftschicht eine Dicke aufweist, die 5-30 Prozent der Gesamtdicke der Folie beträgt.

10. Folie gemäß Anspruch 1, wobei die Trennschicht eine Dicke aufweist, die 5-30 Prozent der Gesamtdicke der Folie beträgt.

11. Folie gemäß Anspruch 1, wobei die Folie eine Haftkraft gemäß der folgenden Gleichung vorweist:

$$\text{Haftkraft (g)} = (0,97 \times \text{Gew.-\% an Polyethylenzusammensetzung in der Trennschicht}) + 204$$

12. Folie gemäß Anspruch 1, wobei die Polyethylenzusammensetzung einen Metallkatalysatorrückstand von größer als oder gleich 1 Teil an kombiniertem Gewicht von mindestens drei Metallrückständen pro eine Million Teile Polyethylenpolymer aufweist, wobei die mindestens drei Metallrückstände ausgewählt sind aus der Gruppe, bestehend aus Titan, Zirkonium, Hafnium, Vanadium, Niob, Tantal, Chrom, Molybdän, Wolfram und Kombinationen davon, und wobei jeder der mindestens drei Metallrückstände zu größer als oder gleich 0,2 ppm vorhanden ist.

13. Folie gemäß Anspruch 1, wobei die Polyethylenzusammensetzung mindestens 0,75 ppm an Vanadium aufweist.

14. Folie gemäß Anspruch 1, wobei das Polyethylen mindestens 0,3 ppm Zirkonium beinhaltet.

15. Verfahren zum Herstellen der mehrschichtigen Folie gemäß einem der vorhergehenden Ansprüche, wobei das Verfahren Folgendes beinhaltet:

Coextrudieren der Haftschichtzusammensetzung mit der Trennschichtzusammensetzung in einem Extruder, um einen Schlauch mit einer Haftschicht und einer Trennschicht zu bilden; und

Kühlen des Schlauchs, um eine mehrschichtige geblasene Stretchfolie zu bilden.

**Revendications**

1. Un film multicouche comprenant une couche collante et une couche de libération, dans lequel :

la couche collante comprend :

(i) un élastomère d'éthylène/alpha-oléfine ayant une masse volumique comprise dans la gamme de 0,855 à 0,890 gramme/cm$^3$, telle que mesurée conformément à l'ASTM D-792, et un indice de fluidité, $I_2$, tel que mesuré conformément à l'ASTM D-1238, Procédure B (condition 190 °C/2,16 kg), compris dans la gamme de 0,1 à 30 grammes/10 minutes ; et

(ii) un polymère de polyéthylène sélectionné parmi un polyéthylène ultra-basse densité, un polyéthylène très basse densité, ou des combinaisons de ceux-ci, dans lequel le polymère de polyéthylène a une masse volumique comprise dans la gamme de 0,885 à 0,915 gramme/cm$^3$, telle que mesurée conformément à l'ASTM D-792, un indice de fluidité, $I_2$, compris dans la gamme de 0,1 à 30 grammes/10 minutes, tel que mesuré conformément à l'ASTM D-1238, Procédure B (condition 190 °C/2,16 kg), et une fraction de purge supérieure à 20 pour cent telle que déterminée par la méthode d'essai de Fractionnement par Cristallisation et Élution (CEF) décrite dans la description ;

et

la couche de libération comprend une composition de polyéthylène qui comprend le produit de réaction d'éthylène et, facultativement, d'un ou de plusieurs comonomères d'alpha-oléfine, dans lequel la composition de polyéthylène est **caractérisée par** les propriétés suivantes :

(a) un indice de fluidité, $I_2$, allant de 0,1 à 2,0 g/10 min ; tel que mesuré conformément à l'ASTM D-1238, Procédure B (condition 190 °C/2,16 kg),

(b) une masse volumique allant de 0,910 à 0,930 g/cm$^3$, telle que mesurée conformément à l'ASTM D-792,

(c) un rapport de fluidité à l'état fondu, $I_{10}/I_2$, allant de 6,0 à 7,6, dans lequel $I_{10}$ est mesuré conformément à l'ASTM D-1238, Procédure B (condition 190 °C/10,0 kg) et $I_2$ est mesuré conformément à l'ASTM D-1238, Procédure B (condition 190 °C/2,16 kg), et

(d) une distribution des masses moléculaires, (Mw/Mn), allant de 2,5 à 4,0.

2. Le film de la revendication 1, dans lequel la composition de polyéthylène de la couche de libération est formée en présence d'une composition de catalyseur comprenant un procatalyseur multimétallique par le biais d'une polymérisation en solution.

3. Le film de la revendication 1, dans lequel la couche de libération comprend de 20 % en poids à 80 % en poids de la composition de polyéthylène.

4. Le film de la revendication 1, dans lequel la couche de libération comprend en outre un polyéthylène basse densité.

5. Le film de la revendication 1, dans lequel le comonomère de polyéthylène de la couche de libération est **caractérisé par** un indice de largeur de distribution de comonomères, CDBI, de moins de 60 %, tel que déterminé selon la méthode décrite dans la description.

6. Le film de la revendication 1, dans lequel la composition de polyéthylène de la couche de libération est **caractérisée par** un rapport de fluidité à l'état fondu, $I_{10}/I_2$, allant de 6,5 à 7,6, dans lequel $I_{10}$ est mesuré conformément à l'ASTM D-1238, Procédure B (condition 190 °C/10,0 kg) et $I_2$ est mesuré conformément à l'ASTM D-1238, Procédure B (condition 190 °C/2,16 kg).

7. Le film de la revendication 1, dans lequel la couche collante comprend de 10 % en poids à 90 % en poids de l'élastomère d'éthylène/alpha-oléfine.

8. Le film de la revendication 1, le film comprenant en outre une couche de cœur positionnée entre la couche collante et la couche de libération.

9. Le film de la revendication 1, dans lequel la couche collante a une épaisseur qui est de 5 à 30 pour cent de l'épaisseur globale du film.

10. Le film de la revendication 1, dans lequel la couche de libération a une épaisseur qui est de 5 à 30 pour cent de l'épaisseur globale du film.

11. Le film de la revendication 1, le film manifestant une force collante selon l'équation suivante :

Force Collante (g) = (0,97 x % en poids de Composition de Polyéthylène dans la Couche de Libération) + 204

12. Le film de la revendication 1, dans lequel la composition de polyéthylène a un résidu de catalyseur métallique supérieur ou égal à 1 partie en poids combiné d'au moins trois résidus métalliques pour un million de parties de polymère de polyéthylène, dans lequel les au moins trois résidus métalliques sont sélectionnés dans le groupe constitué du titane, du zirconium, du hafnium, du vanadium, du niobium, du tantale, du chrome, du molybdène, du tungstène, et de combinaisons de ceux-ci, et dans lequel chacun des au moins trois résidus métalliques est présent dans une quantité supérieure ou égale à 0,2 ppm.

13. Le film de la revendication 1, dans lequel la composition de polyéthylène a au moins 0,75 ppm de vanadium.

14. Le film de la revendication 1, dans lequel le polyéthylène comprend au moins 0,3 ppm de zirconium.

15. Une méthode de réalisation du film multicouche selon l'une quelconque des revendications précédentes, la méthode comprenant :

la coextrusion de la composition de couche collante avec la composition de couche de libération dans une extrudeuse afin de former un tube ayant une couche collante et une couche de libération ; et le refroidissement du tube afin de former un film étirable soufflé multicouche.

**FIG. 1**

**EP 3 344 455 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011311792 A1
- WO 2004031049 A1
- US 7498282 B
- US 5272236 A, Lai
- US 6486284 B, Karande
- US 6100341 A, Friedman
- US 7608668 B
- US 20080038571 A, Klitzmiller
- US 20080176981 A, Biscoglio
- US 3318538 A, Needham
- US 6111019 A, Arjunan
- US 6521338 B, Maka
- US 8372931 B
- WO 9303093 A
- US 5292845 A, Kawasaki

### Non-patent literature cited in the description

- **WILLIAMS ; WARD.** *J. Polym. Sci., Polym. Let.,* 1968, vol. 6, 621
- **MONRABAL et al.** *Macromol. Symp.,* 2007, vol. 257, 71-79
- **J. C. RANDALL.** *Rev. Macromol. Chem. Phys.,* vol. C29, 201-317